(19) Europäisches Patentamt
European Patent Office
Office européen des brevets

(11) **EP 3 029 449 A1**

(12) **EUROPEAN PATENT APPLICATION**
published in accordance with Art. 153(4) EPC

(43) Date of publication:
**08.06.2016 Bulletin 2016/23**

(51) Int Cl.:
***G01M 13/04*** *(2006.01)*    ***F16C 19/00*** *(2006.01)*
***G01H 17/00*** *(2006.01)*

(21) Application number: **14832939.4**

(22) Date of filing: **01.07.2014**

(86) International application number:
**PCT/JP2014/067517**

(87) International publication number:
**WO 2015/015987 (05.02.2015 Gazette 2015/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.08.2013 JP 2013160405
05.08.2013 JP 2013162323**

(71) Applicant: **NTN Corporation
Osaka-shi, Osaka 550-0003 (JP)**

(72) Inventors:
• **TSUTSUI, Hideyuki
Kuwana-shi
Mie 511-0867 (JP)**
• **SAKAGUCHI, Tomoya
Kuwana-shi
Mie 511-0867 (JP)**

(74) Representative: **Bockhorni & Kollegen
Elsenheimerstraße 49
80687 München (DE)**

(54) **BEARING-DEVICE VIBRATION ANALYSIS METHOD, BEARING-DEVICE VIBRATION ANALYSIS DEVICE, AND ROLLING-BEARING STATUS-MONITORING DEVICE**

(57) A vibration analysis method includes the steps of: inputting data about damage of a rolling bearing (S10); calculating, by a dynamics analysis program, a history of a displacement between inner and outer rings occurring to the rolling bearing due to the damage when a rotational shaft of the rolling bearing rotates (S40); calculating a vibration characteristics model of the bearing device by a mode analysis program (S60); and calculating a vibration waveform at a predetermined position on the bearing device by applying, to the vibration characteristics model, a history of an exciting force obtained by multiplying the displacement between the inner and outer rings calculated in the step of calculating a history (S40), by a bearing spring constant (S80).

FIG.4

```
START

┌─────────────────────────────────────────────────┐  S10
│ INPUT DATA ABOUT ROLLING ELEMENTS, RACEWAY, AND  │
│ DAMAGE                                           │
└─────────────────────────────────────────────────┘

┌─────────────────────────────────────────────────┐  S20
│ CALCULATE VARIATION OF APPROACH AMOUNT BETWEEN   │
│ ROLLING ELEMENT AND RACEWAY SURFACE BY CONTACT   │
│ ANALYSIS PROGRAM                                 │
└─────────────────────────────────────────────────┘

┌─────────────────────────────────────────────────┐  S30
│ INPUT DATA FOR DYNAMICS ANALYSIS SUCH AS         │
│  · CHARACTERISTICS DATA OF BEARING               │
│  · VARIATION OF APPROACH AMOUNT                  │
│  · OPERATING CONDITIONS OF BEARING               │
│  · MASSES AND SPRING CHARACTERISTICS OF          │
│    ROTATIONAL SHAFT AND HOUSING                  │
└─────────────────────────────────────────────────┘

┌─────────────────────────────────────────────────┐  S40
│ CALCULATE HISTORY OF DISPLACEMENT BETWEEN INNER  │
│ AND OUTER RINGS DUE TO DAMAGE, BY DYNAMICS       │
│ ANALYSIS PROGRAM                                 │
└─────────────────────────────────────────────────┘

┌─────────────────────────────────────────────────┐  S50
│ INPUT DATA FOR THEORY MODE ANALYSIS SUCH AS      │
│  · SHAPE, MATERIAL DENSITY, YOUNG'S MODULUS, AND │
│    POISSON'S RATIO OF BEARING DEVICE             │
│  · LINEAR SPRING CONSTANTS OF BEARING, HOUSING,  │
│    BOLT COUPLING PORTION FOR EXAMPLE             │
└─────────────────────────────────────────────────┘

┌─────────────────────────────────────────────────┐  S60
│ CALCULATE MODE INFORMATION OF BEARING DEVICE BY  │
│ THEORY MODE ANALYSIS PROGRAM                     │
└─────────────────────────────────────────────────┘

┌─────────────────────────────────────────────────┐  S70
│ INPUT DATA FOR TRANSIENT RESPONSE ANALYSIS       │
│ (MODE ANALYSIS METHOD) SUCH AS                   │
│  · MODE INFORMATION                              │
│  · VARIATION OF APPROACH AMOUNT                  │
│  · HISTORY OF DISPLACEMENT BETWEEN INNER AND     │
│    OUTER RINGS                                   │
│  · BEARING SPRING CONSTANT                       │
└─────────────────────────────────────────────────┘

┌─────────────────────────────────────────────────┐  S80
│ CALCULATE VIBRATION WAVEFORM OF BEARING DEVICE   │
│ BY TRANSIENT RESPONSE ANALYSIS (MODE ANALYSIS    │
│ METHOD) PROGRAM                                  │
└─────────────────────────────────────────────────┘

RETURN
```

EP 3 029 449 A1

**Description**

TECHNICAL FIELD

The present invention relates to a bearing device vibration analysis method, a bearing device vibration analyzer, and a rolling bearing condition monitoring system, and particularly relates to a technique of analyzing, by a computer, vibration of a bearing device which includes a rolling bearing and its housing, and to a rolling bearing condition monitoring system for which the results of the analysis are used.

BACKGROUND ART

Japanese Patent Laying-Open No. 2006-234785 (PTD 1) discloses an abnormality diagnosing apparatus for a rolling bearing. With this abnormality diagnosing apparatus, a frequency analysis of an electric signal from a vibration sensor is conducted and, based on a spectrum obtained from the frequency analysis, a reference value is calculated. A peak of the spectrum that is larger than the reference value is sampled. Then, a frequency between the peaks and a frequency component owing to damage to the bearing and calculated based on the rotational speed are compared and checked with each other. Based on the results of the check, whether an abnormality of the rolling bearing is present or not and where the abnormality is present are determined (see PTD 1).

CITATION LIST

PATENT DOCUMENT

PTD 1: Japanese Patent Laying-Open No. 2006-234785

NON PATENT DOCUMENT

NPD 1: "The Practical Equipment Diagnosis through Vibration Method-Answer Questions in the Field," Noriaki Inoue, Japan Institute of Plant Maintenance, pp. 65-71

SUMMARY OF INVENTION

TECHNICAL PROBLEM

The above-described abnormality diagnosing apparatus determines that the bearing has an abnormality when the magnitude of the peak of the vibration waveform exceeds a predetermined threshold. Meanwhile, in order to select this threshold value for the abnormality diagnosis, it is necessary to recognize in advance the state of vibration when the bearing has an abnormality. A technique of recognizing the state of vibration when the bearing has an abnormality may for example be a technique by which a damaged bearing is intentionally incorporated in an actual machine or an actual machine is kept operated until the bearing is damaged, to thereby collect data about vibration which is exhibited when the bearing has an abnormality.

Such a technique, however, is difficult to apply to an installation under the condition that the installation has a large size or a long lifetime, or is expensive. In particular, a wind power generation facility meets this condition, and it is difficult to select a threshold value which is used for making a determination about an abnormality of the bearing by a condition monitoring system which monitors the condition of the wind power generation facility. Therefore, for a large-sized facility such as wind power generation facility, a threshold value which is used for making a determination about an abnormality is determined by statistically processing actual data collected regardless of differences in structural details and differences in machine type, for example.

It is therefore desired that the vibration state exhibited when an abnormality occurs to the bearing can be analyzed in advance by a computer. If the vibration state of the bearing device can be predicted through analysis by a computer, the threshold value used for making a determination about an abnormality of a large-sized facility such as wind power generation facility can easily be set. Moreover, in such a case as well where a sensor for detecting vibration of the bearing device is to be relocated, the threshold value used for making a determination about an abnormality can be set without newly collecting data with an actual machine.

The present invention has been made to solve this problem, and an object of the present invention is to provide a vibration analysis method and a vibration analyzer for analyzing, by a computer, vibration of a bearing device which includes a rolling bearing and its housing.

Another object of the present invention is to provide a rolling bearing condition monitoring system for which the results of analysis in accordance with such a vibration analysis method are used.

Moreover, in the above-described abnormality diagnosing apparatus for a rolling bearing, the vibration sensor detects vibration of a bearing device which includes a rolling bearing and its housing. When a peak of a vibration waveform detected by the vibration sensor exceeds a predetermined threshold value, it is determined that the rolling bearing has an abnormality.

In order to enhance the precision of an abnormality diagnosis, the vibration sensor is required to be capable of detecting, with a high sensitivity, vibration which occurs due to damage to a bearing. It is therefore necessary to place the vibration sensor at a position where a high detection sensitivity can be obtained. Regarding such a placement position of the vibration sensor, NPD 1 ("The Practical Equipment Diagnosis through Vibration Method-Answer Questions in the Field," Noriaki Inoue, Japan Institute of Plant Maintenance, pp. 65-71) for example describes that it is desired to place the vibration sensor at a position which is close to a bearing to be measured and which has a high stiffness. This is for the reason that if the stiffness is low at the placement position of the vibration sensor, a high-frequency component which occurs due to damage to a bearing may attenuate, resulting in a failure to be able to detect an abnormality of the bearing.

However, the method for selecting a placement position where a vibration sensor is to be placed as disclosed in NPD 1 is a qualitative method. Therefore, it is impossible for this method to determine whether or not a selected placement position is appropriate, until a vibration waveform detected by the vibration sensor which is actually attached to the bearing device is recognized when the bearing is damaged. There has thus been a problem that it is difficult to place the vibration sensor at a position where the detection sensitivity is high and an adequate detection sensitivity of the vibration sensor cannot be ensured. Particularly in the case of a large-sized facility such as wind power generation facility, it is not easy to incorporate a damaged bearing to experimentally recognize the vibration waveform. The aforementioned selection method is therefore not practical. As a result, it has been difficult to detect damage to a bearing in an early stage.

In order to address this problem, it is desired to enable a vibration state of a bearing device to be analyzed by a computer in advance. If it is possible for a computer to analyze and predict a vibration state at a placement position where the vibration sensor is placed, a placement position with a high detection sensitivity can easily be selected. Moreover, a placement position with a high detection sensitivity can be found without the need to attach the vibration sensor to an actual device. Therefore, even for a large-sized facility such as wind power generation facility, a placement position of a vibration sensor can easily be selected.

The present invention has also been made to solve the above problem, and an object of the present invention is to enable a rolling bearing condition monitoring system to easily and appropriately select a placement position where a vibration sensor is placed on a bearing device, using the results of a vibration analysis method analyzing, by a computer, vibration of a bearing device which includes a rolling bearing and its housing.

SOLUTION TO PROBLEM

According to the present invention, a bearing device vibration analysis method is a bearing device vibration analysis method for analyzing vibration of a bearing device by a computer, the bearing device including a rolling bearing and a housing of the rolling bearing, and the method includes the steps of: inputting data about a shape of damage given to a contact portion between a rolling element and a raceway surface of the rolling bearing; calculating a displacement between an inner ring and an outer ring of the rolling bearing caused by the damage; calculating a vibration characteristics model by a mode analysis program for analyzing a vibration mode of the bearing device, the vibration characteristics model representing a vibration characteristic of the bearing device; and calculating a vibration waveform at a predetermined position on the bearing device by applying, to the vibration characteristics model, a history of an exciting force occurring to the rolling bearing, the history of the exciting force being obtained by multiplying the displacement between the inner and outer rings calculated in the step of calculating a displacement between the inner and outer rings, by a spring constant between the inner ring and the outer ring.

Preferably, in the step of calculating a vibration waveform, the history of the exciting force is applied to at least one point on a central axis of a rotational ring of the rolling bearing in the vibration characteristics model. It should be noted that in order to take into consideration the influence of moment, it may be applied to a plurality of points on the central axis of the rotational ring (inner ring for example).

Preferably, the bearing device vibration analysis method further includes the step of determining a threshold value of a magnitude of vibration for determining that the rolling bearing has an abnormality, using the vibration waveform calculated in the step of calculating a vibration waveform.

Preferably, the step of calculating a displacement between the inner and outer rings includes the step of calculating, by a dynamics analysis program for conducting a dynamics analysis of the rolling bearing, a history of the displacement between the inner and outer rings caused by the damage during rotation of a rotational shaft of the rolling bearing.

Preferably, the rolling bearing is a ball bearing. The step of calculating a history of the displacement between the inner and outer rings includes the steps of: calculating, by a contact analysis program for analyzing contact between a rolling element and a raceway surface of the rolling bearing, a variation of an approach amount between the rolling element and the raceway surface caused by the given damage; and calculating, by the dynamics analysis program, the history of the displacement between the inner and outer rings caused by the variation of the approach amount during rotation of the rotational shaft of the rolling bearing.

Preferably, the rolling bearing is a roller bearing. For the dynamics analysis program, a slice method is used by which a contact load is calculated for each of minute-width sections which are obtained by slicing a contact portion between a roller and a raceway surface along an axial direction of the roller. The vibration analysis method further includes the step of calculating, for each slice, a variation of an approach amount between the roller and the raceway surface caused by the given damage. The step of calculating a history of the displacement between the inner and outer rings includes the step of calculating the history of the displacement between the inner and outer rings by the dynamics analysis program for which the slice method is used.

Preferably, in the step of calculating a history of the displacement between the inner and outer rings, it is supposed that a stationary ring of the rolling bearing is connected to the housing through a linear spring in a bearing radial direction at a position of a rolling element within a load-applied area.

Preferably, in the step of calculating a vibration waveform, the history of the displacement between the inner and outer rings is applied to a rolling element within a load-applied area, depending on a share of a force supported by each rolling element within the load-applied area.

According to the present invention, a bearing device vibration analyzer is a bearing device vibration analyzer for analyzing vibration of a bearing device including a rolling bearing and a housing of the rolling bearing, and includes an input unit, a displacement calculation unit, a vibration characteristics calculation unit, and a vibration waveform calculation unit. The input unit is configured to input data about a shape of damage given to a contact portion between a rolling element and a raceway surface of the rolling bearing. The displacement calculation unit is configured to calculate a displacement between an inner ring and an outer ring of the rolling bearing caused by the damage. The vibration characteristics calculation unit is configured to calculate a vibration characteristics model by a mode analysis program for analyzing a vibration mode of the bearing device, the vibration characteristics model representing a vibration characteristic of the bearing device. The vibration waveform calculation unit is configured to calculate a vibration waveform at a predetermined position on the bearing device by applying, to the vibration characteristics model calculated by the vibration characteristics calculation unit, a history of an exciting force occurring to the rolling bearing, the history of the exciting force being obtained by multiplying the displacement between the inner and outer rings calculated by the displacement calculation unit, by a spring constant between the inner ring and the outer ring.

Preferably, the displacement calculation unit calculates, by a dynamics analysis program for conducting a dynamics analysis of the rolling bearing, a history of the displacement between the inner and outer rings caused by the damage during rotation of a rotational shaft of the rolling bearing.

According to the present invention, a rolling bearing condition monitoring system includes a vibration sensor and a determination unit. The vibration sensor is configured to measure vibration of a bearing device including a rolling bearing and a housing of the rolling bearing. The determination unit is configured to determine that the rolling bearing has an abnormality when a magnitude of the vibration measured with the vibration sensor exceeds a predetermined threshold value. Here, the predetermined threshold value is determined by using a vibration waveform calculated according to a vibration analysis method for analyzing vibration of the bearing device by a computer. The vibration analysis method includes the steps of: inputting data about a shape of damage given to a contact portion between a rolling element and a raceway surface of the rolling bearing; calculating a displacement between an inner ring and an outer ring of the rolling bearing caused by the damage; calculating a vibration characteristics model by a mode analysis program for analyzing a vibration mode of the bearing device, the vibration characteristics model representing a vibration characteristic of the bearing device; and calculating a vibration waveform at a placement position of the vibration sensor on the bearing device, by applying, to the vibration characteristics model, a history of an exciting force occurring to the rolling bearing, the history of the exciting force being obtained by multiplying the displacement between the inner and outer rings calculated in the step of calculating a displacement between inner and outer rings, by a spring constant between the inner ring and the outer ring.

Preferably, the step of calculating a displacement between inner and outer rings includes the step of calculating, by a dynamics analysis program for conducting a dynamics analysis of the rolling bearing, a history of the displacement between the inner and outer rings caused by the damage during rotation of a rotational shaft of the rolling bearing.

Preferably, the placement position of the vibration sensor is selected using the vibration waveform calculated according to the vibration analysis method. The step of calculating a vibration waveform includes the step of calculating a vibration waveform at an arbitrary position on the bearing device by applying the history of the exciting force to the vibration characteristics model.

Preferably, the vibration analysis method is used to calculate a plurality of vibration waveforms for respective plurality of candidate positions which can be set as the placement position of the vibration sensor. A candidate position with a maximum acceleration amplitude of vibration is selected, from the plurality of candidate positions, as the placement position of the vibration sensor.

Preferably, the bearing device includes a bearing device provided to a main shaft of a wind power generation facility. For each of the plurality of candidate positions, a ratio is calculated of an acceleration amplitude of vibration calculated according to the vibration analysis method, to an acceleration amplitude of vibration of the bearing device excited by an exciting force occurring to the main shaft. From the plurality of candidate positions, a candidate position for which the ratio is a maximum ratio is selected as the placement position of the vibration sensor.

Preferably, the bearing device includes a bearing device provided to a gearbox of a wind power generation facility. For each of the plurality of candidate positions, a ratio is calculated of an acceleration amplitude of vibration calculated according to the vibration analysis method, to an acceleration amplitude of vibration of the bearing device excited by an exciting force occurring to a gear of the gearbox. From the plurality of candidate positions, a candidate position for which the ratio is a maximum ratio is selected as the placement position of the vibration sensor.

Preferably, the bearing device includes a bearing device provided to a generator of a wind power generation facility. The generator is connected by a coupling portion to a gearbox of the wind power generation facility. For each of the plurality of candidate positions, a ratio is calculated of an acceleration amplitude of vibration calculated according to the vibration analysis method, to an acceleration amplitude of vibration of the bearing device excited by an exciting force occurring to the coupling portion. From the plurality of candidate positions, a candidate position for which the ratio is a maximum ratio is selected as the placement position of the vibration sensor.

Preferably, the rolling bearing condition monitoring system further includes a selection unit configured to select the placement position of the vibration sensor using a vibration waveform calculated according to the vibration analysis method.

Preferably, the predetermined threshold value is determined using a vibration waveform which is expected to be exhibited at the selected placement position selected, of the vibration sensor when an abnormality occurs to the rolling bearing.

ADVANTAGEOUS EFFECTS OF INVENTION

According to the present invention, data about a shape of damage of the bearing is input, and a displacement between the inner ring and the outer ring occurring to the rolling bearing due to the damage is calculated. Then, a history of an exciting force occurring to the rolling bearing that is obtained by multiplying the calculated displacement between the inner ring and the outer ring by a spring constant between the inner ring and the outer ring is applied to a vibration characteristics model of the vibration device that is calculated by the mode analysis program. Thus, a vibration waveform at a predetermined position on the bearing device (a placement location where the vibration sensor is placed) is calculated. In this way, a vibration waveform of the bearing device in the case where damage occurs within the bearing can be predicted by a computer. Thus, according to the present invention, the results of this prediction can be used to appropriately determine a threshold value for making a determination about an abnormality of the rolling bearing by the rolling-bearing condition monitoring system.

Moreover, according to the present invention, the results of the prediction can be used to easily and appropriately select a placement position where the vibration sensor is placed on the bearing device, by the bearing-device condition monitoring system.

BRIEF DESCRIPTION OF DRAWINGS

Fig. 1 is a diagram showing a model of a bearing device analyzed by a vibration analysis method according to a first embodiment of the present invention.
Fig. 2 is a block diagram showing main components in a hardware configuration of a vibration analyzer according to the first embodiment.
Fig. 3 is a functional block diagram functionally showing a configuration of the vibration analyzer shown in Fig. 2.
Fig. 4 is a flowchart for illustrating a process procedure of a vibration analysis method executed by the vibration analyzer shown in Fig. 2.
Fig. 5 is a diagram schematically showing a configuration of a wind power generation facility to which a rolling bearing condition monitoring system is applied.
Fig. 6 is a functional block diagram functionally showing a configuration of a data processor shown in Fig. 5.
Fig. 7 is a diagram showing a vibration waveform of a bearing device when no abnormality occurs to the bearing device.
Fig. 8 is a diagram showing a vibration waveform of a bearing device exhibited when surface roughness or insufficient lubrication occurs to a race of the bearing device.

Fig. 9 is a diagram showing a vibration waveform of a bearing device in an initial stage of occurrence of peeling to a race of the bearing device.

Fig. 10 is a diagram showing a vibration waveform of a bearing device exhibited in a terminal stage of a peeling abnormality.

Fig. 11 is a diagram showing changes with time of a root mean square value of a vibration waveform of a bearing device and a root mean square value of an AC component of an envelope waveform thereof that are exhibited when peeling occurs to a part of a race of the bearing device and the peeling is thereafter transferred to the whole area of the race.

Fig. 12 is a diagram showing changes with time of a root mean square value of a vibration waveform of a bearing device and a root mean square value of an AC component of an envelope waveform thereof that are exhibited when surface roughness or insufficient lubrication occurs to a race of the bearing device.

Fig. 13 is a functional block diagram functionally showing another configuration of the data processor.

Fig. 14 is a flowchart for illustrating a process procedure of a vibration analysis method executed by a vibration analyzer according to a modification.

Fig. 15 is a flowchart for illustrating a process procedure of a vibration analysis method executed by a vibration analyzer according to a second embodiment.

Fig. 16 is a functional block diagram functionally showing a configuration of a vibration analyzer according to a third embodiment.

Fig. 17 is a flowchart for illustrating a process procedure of a vibration analysis method executed by a vibration analyzer according to the third embodiment.

Fig. 18 is a functional block diagram functionally showing a configuration of a vibration analyzer according to a fourth embodiment.

Fig. 19 is a flowchart for illustrating a process procedure of a method for selecting a placement position where a vibration sensor is placed, using the vibration analysis method shown in Fig. 4, according to the fourth embodiment.

Fig. 20 is a flowchart for illustrating a process procedure of a method for selecting a placement position where a vibration sensor is placed on a bearing device shown in Fig. 5, according to the fourth embodiment.

Fig. 21 is a flowchart for illustrating a process procedure of a method for selecting a placement position where a vibration sensor is placed on a bearing device for a gearbox.

Fig. 22 is a flowchart for illustrating a process procedure of a method for selecting a placement position where a vibration sensor is placed on a bearing device for an electric generator.

DESCRIPTION OF EMBODIMENTS

Embodiments of the present invention will hereinafter be described in detail with reference to the drawings. While a plurality of embodiments are described in the following, it is originally intended at the time of filing of the patent application that characteristics described in connection with the embodiments are combined as appropriate. In the drawings, the same or corresponding parts are denoted by the same reference characters, and a description thereof will not be repeated.

[First Embodiment]

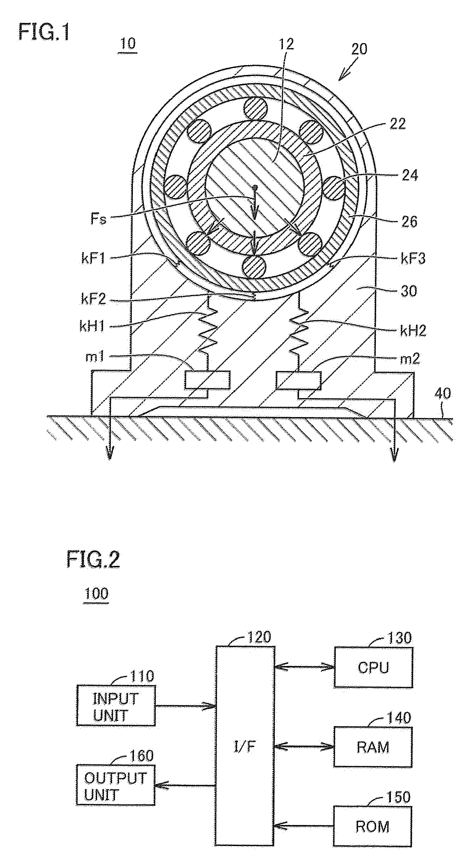

Fig. 1 is a diagram showing a model of a bearing device 10 analyzed by a vibration analysis method according to a first embodiment of the present invention. Referring to Fig. 1, bearing device 10 includes a rolling bearing 20 and a housing 30. The first embodiment will be described regarding the case where rolling bearing 20 is a ball bearing. Rolling bearing 20 includes an inner ring 22, a plurality of rolling elements 24, and an outer ring 26.

Inner ring 22 is fit on a rotational shaft 12 and rotated together with rotational shaft 12. Outer ring 26 is a stationary ring provided outward relative to inner ring 22 and fit in housing 30. A plurality of rolling elements 24 are each a spherical ball, and are located between inner ring 22 and outer ring 26 with the intervals therebetween kept by a cage (not shown). Housing 30 is fixed to a base 40 with bolts (not shown).

Regarding this model, it is supposed that outer ring 26 which is a stationary ring is connected to housing 30 through linear springs kF1 to kF3 in the bearing radial direction at the positions of rolling elements, which are located within a load-applied area, among a plurality of rolling elements 24. Further, as to a coupling portion where housing 30 and base 40 are coupled to each other, masses m1, m2 are exerted respectively on linear springs kH1, kH2, like coupling with bolts.

Description of Vibration Analysis Method for Bearing Device 10

Fig. 2 is a block diagram showing main components in a hardware configuration of a vibration analyzer according to the first embodiment. Referring to Fig. 2, a vibration analyzer 100 includes an input unit 110, an interface (I/F) unit 120, a CPU (Central Processing Unit) 130, a RAM (Random Access Memory) 140, a ROM (Read Only Memory) 150, and an output unit 160.

CPU 130 executes a variety of programs stored in ROM 150 to thereby implement a vibration analysis method detailed later herein. RAM 140 is used as a work area by CPU 130. In ROM 150, a program including steps of a flowchart (described later herein) showing a procedure of the vibration analysis method is recorded. Input unit 110 is a means for reading external data, such as keyboard and/or mouse, recording medium, communication device, or the like. Output unit 160 is a means for outputting the results of operations by CPU 130, such as display, recording medium, communication device, or the like.

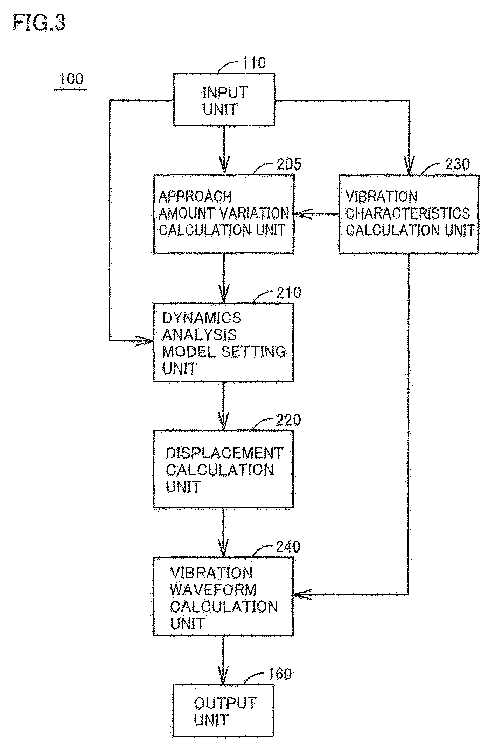

Fig. 3 is a functional block diagram functionally showing a configuration of vibration analyzer 100 shown in Fig. 2. Referring to Fig. 3 together with Fig. 1, vibration analyzer 100 includes an approach amount variation calculation unit 205, a dynamics analysis model setting unit 210, a displacement calculation unit 220, a vibration characteristics calculation unit 230, a vibration waveform calculation unit 240, as well as the above-described input unit 110 and output unit 160.

A prediction of vibration of bearing device 10 by this vibration analyzer 100 generally includes two predictions. Namely, one is a prediction of a history of a displacement between inner and outer rings (between inner ring 22 and outer ring 26) which occurs to rolling bearing 20 when the rotational shaft of rolling bearing 20 is rotated, due to damage to a contact portion where rolling element 24 and a raceway surface (the outer circumferential surface of inner ring 22 or the inner circumferential surface of outer ring 26) of rolling bearing 20 are in contact with each other. The other is a prediction of a waveform of vibration occurring at a placement location where a vibration sensor (not shown) mounted on bearing device 10 is located, due to transmission, through housing 30, of an exciting force based on the displacement that occurs to rolling bearing 20.

From input unit 110, characteristics data about rolling bearing 20, data about the shape of damage given to the contact portion where rolling element 24 and the raceway surface are in contact with each other (hereinafter also referred to as "damage data"), lubrication conditions, operating conditions (such as rotational speed), and characteristics data about rotational shaft 12 and housing 30 which are coupled to rolling bearing 20, for example, are input. Input unit 110 may be a data input means for which a Web interface is used, a reading means for reading data from a recording medium on which the aforementioned data are recorded in a predetermined format, a communication device receiving the aforementioned data externally transmitted in a predetermined format, or the like.

Approach amount variation calculation unit 205 receives from input unit 110 the data regarding rolling elements 24 and their raceway as well as the damage data. Then, approach amount variation calculation unit 205 calculates a variation of an approach amount between rolling element 24 and the raceway surface that is caused by the given damage, by a contact analysis program for analyzing the contact between rolling element 24 and the raceway surface. The contact analysis program calculates a contact pressure distribution of the contact portion by means of the finite element method (FEM) for example, and calculates a variation of the approach amount between rolling element 24 and the raceway surface that depends on whether the damage is present or not.

For the contact analysis, preferably elasto-plastic analysis, which even takes into consideration plastic deformation of the contact portion, is used. This is for the reason that if the contact portion between rolling element 24 and the raceway surface has damage, the surface pressure may become high to the extent that causes local plastic deformation. In order to simplify the calculation, approach amount variation calculation unit 205 may use elastic analysis for the contact analysis to calculate the variation of an elastic approach amount of rolling element 24 that is caused by the damage.

Dynamics analysis model setting unit 210 receives the variety of data as described above that are input from input unit 110 and receives the variation of the approach amount calculated by approach amount variation calculation unit 205. Then, dynamics analysis model setting unit 210 sets a dynamics model of rolling bearing 20 for conducting a dynamics analysis taking into consideration the dynamic characteristics of rolling bearing 20. The dynamics analysis refers to a technique of formulating an equation of motion for each component (inner ring 22, rolling element 24, and outer ring 26) of rolling bearing 20 and integrating simultaneous ordinary differential equations along the time axis. The dynamics analysis enables real-time simulations of interference forces between the components, behaviors of the components, and the like that change with time.

For this dynamics analysis model, the variation of the approach amount calculated by approach amount variation calculation unit 205 is given. Each component of rolling bearing 20 is a rigid body, and rotational shaft 12 and housing 30 that are coupled to rolling bearing 20 are each an elastic body having a predetermined mass and a predetermined vibration mode. Influences of inertial forces of rolling bodies (inner ring, rolling elements 24, and rotational shaft 12) and the gravity acting on each component are reflected on the model.

Displacement calculation unit 220 uses the dynamics analysis model set by dynamics analysis model setting unit 210 to calculate the history of the displacement between the inner and outer rings occurring to rolling bearing 20 when rolling bearing 20 is rotating. The displacement is caused by a change of the approach amount between the raceway and the rolling element given by the damage data which is input from input unit 110. More specifically, displacement calculation unit 220 uses the aforementioned dynamics analysis model to calculate the history of the displacement between the inner and outer rings occurring to rolling bearing 20 due to a change of the approach amount between rolling element 24 and the raceway surface when rotational shaft 12 is being operated in accordance with the operating conditions that are input from input unit 110.

Meanwhile, vibration characteristics calculation unit 230 calculates, by a mode analysis program for analyzing a vibration mode of bearing device 10, a vibration characteristics model representing a vibration transmission characteristic of bearing device 10. In the first embodiment, the so-called theory mode analysis is used to calculate, as a vibration characteristics model, a vibration mode representing a vibration characteristic of bearing device 10. The mode analysis determines, based on the recognition that various vibrations are each made up of a plurality of natural modes, the natural modes and the natural frequencies. The theory mode analysis mathematically determines what vibration mode (eigenvalue information) a structure (elastic body) has. Specifically, the theory mode analysis determines the shape, the mass distribution, the stiffness distribution, and the constraint conditions of an object to be analyzed to produce a model of the object (bearing device 10) and, based on the mass matrix representing the mass characteristic of the model and the stiffness matrix representing the stiffness characteristic thereof, determines the eigenvalue and eigenvector by theoretical analysis or mathematical calculation, to accordingly determine the natural frequency and the natural mode of the object.

Vibration characteristics calculation unit 230 receives from input unit 110 characteristics data such as the shape, the density of the material, the Young's modulus, and the Poisson's ratio, of bearing device 10. Further, rolling element 24 is treated as a linear spring, and vibration characteristics calculation unit 230 receives from input unit 110 spring information for treating each of rolling element 24 and the coupling portion between housing 30 and base 40 (bolt coupling portion where they are coupled with bolts for example) as a linear spring. Then, vibration characteristics calculation unit 230 calculates a vibration characteristics model (vibration mode) of bearing device 10, by the mode analysis program (theory mode analysis program).

Regarding the above-described vibration characteristics model, in order to more accurately reproduce actual vibration characteristics, it is preferable that the bolt coupling portion (a coupling portion where housing 30 and base 40 are coupled to each other for example) is formed so that they are coupled to each other along only a part, which is located in the vicinity of the bolt, of the coupling surface of the bolt coupling portion. This is for the reason that the actual bolt coupling portion is formed to have a coupling surface in the vicinity of the bolt where they are coupled with a high compression force and a coupling surface away from the bolt where they are coupled with a relatively small force. This tendency is higher as the stiffness of parts coupled to each other with the bolt is lower. An example of the shape of the coupling portion in the vicinity of the bolt may be a ring shape which is concentric with the rotational axis of the bolt and has its inner diameter corresponding to the diameter of the bolt hole and its outer diameter corresponding to the diameter of the head of the bolt.

Vibration waveform calculation unit 240 uses the vibration characteristics model calculated by vibration characteristics calculation unit 230 to conduct a transient response analysis and thereby calculate a vibration waveform at a specified position (a location where a vibration sensor is to be placed for example) on bearing device 10. More specifically, vibration waveform calculation unit 240 receives from displacement calculation unit 220, the history of the displacement between the inner and outer rings that occurs to rolling bearing 20, and multiplies the received displacement between the inner and outer rings by a spring constant between the inner and outer rings (hereinafter also referred to as "bearing spring constant") to thereby calculate the history of an exciting force occurring to rolling bearing 20. Then, vibration waveform calculation unit 240 applies the history of the exciting force to the vibration characteristics model calculated by vibration characteristics calculation unit 230, to thereby calculate the vibration waveform at the time.

The bearing spring constant is calculated for example in the following way. Specifically, the Hertz theory is used to calculate a spring constant (referred to as "first spring constant") at the contact portion between inner ring 22 and rolling element 24 and a spring constant (referred to as "second spring constant") at the contact portion between outer ring 26 and rolling element 24. Then, the first spring constant and the second spring constant are regarded as spring constants of springs in series, and a spring constant for one rolling element 24 (referred to as "rolling element spring constant") is calculated. Then, the rolling element spring constants for rolling elements located within a load-applied area are conflated to calculate the bearing spring constant.

Here, in the first embodiment, the history of the exciting force, which is obtained by multiplying, by the bearing spring constant, the displacement between the inner and outer rings by vibration waveform calculation unit 240, is applied, in the vibration characteristics model calculated by vibration characteristics calculation unit 230, to at least one point on the central axis of inner ring 22 of rolling bearing 20. Accordingly, the prediction of the displacement between the inner and outer rings of rolling bearing 20 by means of a dynamics analysis program and of the exciting force based on the displacement can be combined with the prediction of the vibration transmission characteristic of bearing device 10 by means of the mode analysis program, to thereby conduct a precise vibration analysis.

To output unit 160, the vibration waveform calculated by vibration waveform calculation unit 240 is output. Output unit 160 may be a display indicating the vibration waveform, a write means for writing the data of the vibration waveform on a recording medium in a predetermined format, a communication device transmitting to the outside the data of the vibration waveform in a predetermined format, or the like.

As seen from the foregoing, in the first embodiment, the displacement between the inner and outer rings of rolling bearing 20 calculated by means of the dynamics analysis program is multiplied by the bearing spring constant to thereby calculate the history of the exciting force occurring to rolling bearing 20, and the calculated history of the exciting force is applied to the vibration characteristics model to thereby conduct a response analysis (vibration analysis). With this method, even when the exciting force which occurs when a rolling element passes a damaged portion is small due to a moderate change in shape of the damaged portion like damage due to wear, the response analysis (vibration analysis) can be conducted based on the displacement between the inner and outer rings that actually occurs.

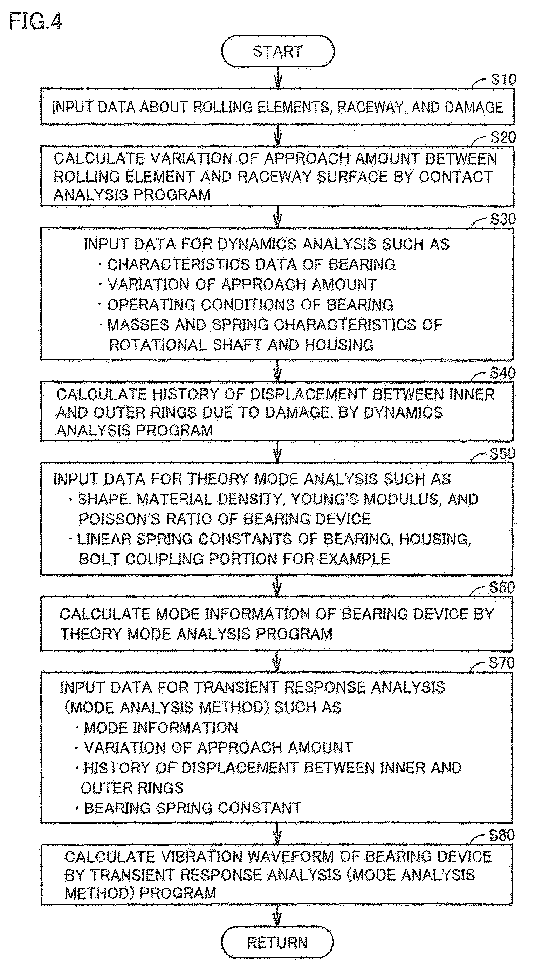

Fig. 4 is a flowchart for illustrating a process procedure of a vibration analysis method executed by vibration analyzer 100 shown in Fig. 2. Referring to Fig. 4, initially vibration analyzer 100 reads from input unit 110 the data about rolling elements 24 and their raceway (the outer circumferential surface of inner ring 22 or the inner circumferential surface of outer ring 26) as well as the data about damage given to rolling bearing 20 (step S10).

Next, vibration analyzer 100 calculates, in accordance with a prepared contact analysis program, the variation of the approach amount between rolling element 24 and the raceway surface due to the damage which is input in step S10 (step S20). Then, vibration analyzer 100 reads a variety of data for conducting a dynamics analysis of rolling bearing 20 (step S30). Specifically, vibration analyzer 100 reads data from input unit 110, such as the characteristics data and the operating conditions of rolling bearing 20 as well as the masses and the spring characteristics of rotational shaft 12 and housing 30, and further reads the variation of the approach amount calculated in step S20.

Subsequently, vibration analyzer 100 sets a dynamics analysis model of rolling bearing 20 based on the variety of data read in step S30. Then, vibration analyzer 100 calculates, in accordance with a dynamics analysis program for which the dynamics analysis model is used, the history of the displacement between the inner and outer rings occurring to rolling bearing 20 due to the variation of the approach amount when rotational shaft 12 is operated under the operating conditions which are input in step S10 (step S40).

Next, vibration analyzer 100 reads a variety of data for conducting a theory mode analysis of bearing device 10 (step S50). Specifically, vibration analyzer 100 reads characteristics data such as the shape, the density of the material, the Young's modulus, and the Poisson's ratio, of bearing device 10. Vibration analyzer 100 also reads spring information for treating each of rolling element 24 and the coupling portion between housing 30 and base 40 (bolt coupling portion where they are coupled with bolts for example) as a linear spring. Each of the above data may be read from input unit 110 or may be held in advance as internal data.

In response to input of each data in step S50, vibration analyzer 100 calculates mode information of bearing device 10 in accordance with a prepared theory mode analysis program (step S60). Specifically, based on each data which is input in step S50, vibration analyzer 100 calculates the vibration mode (natural frequency and natural mode) of bearing device 10 by means of the theory mode analysis program.

Next, vibration analyzer 100 reads a variety of data for conducting a transient response analysis (mode analysis method) of bearing device 10 (step S70). Specifically, vibration analyzer 100 reads the mode information calculated in step S60, the variation of the approach amount calculated in step S20, and the history of the displacement between the inner and outer rings calculated in step S40, for example.

Then, in accordance with a prepared transient response analysis (mode analysis method) program, vibration analyzer 100 calculates the vibration waveform of bearing device 10 (step S80). Specifically, vibration analyzer 100 applies the history of the exciting force obtained by multiplying, by the bearing spring constant, the displacement (history) between the inner and outer rings calculated in step S40, to at least one point on the central axis of inner ring 22 of bearing device 10 having the vibration mode calculated in step S60, to thereby calculate the vibration waveform occurring to bearing device 10 due to the displacement between the inner and outer rings calculated in step S40.

In this way, by vibration analyzer 100, the vibration waveform of bearing device 10 when damage occurs in rolling bearing 20 can be simulated. Accordingly, by means of vibration analyzer 100, a threshold value can be determined for making a determination about an abnormality of the bearing by a condition monitoring system which monitors the condition (abnormality) of the rolling bearing, and the condition monitoring system can use this threshold value to make a determination about an abnormality of the rolling bearing.

In the following, as to the rolling bearing condition monitoring system for which the threshold value is used for making a determination about an abnormality of the bearing that is determined from the results of the analysis by vibration analyzer 100, a rolling bearing condition monitoring system in a wind power generation facility will exemplarily be described by way of example.

Overall Configuration of Wind Power Generation Facility

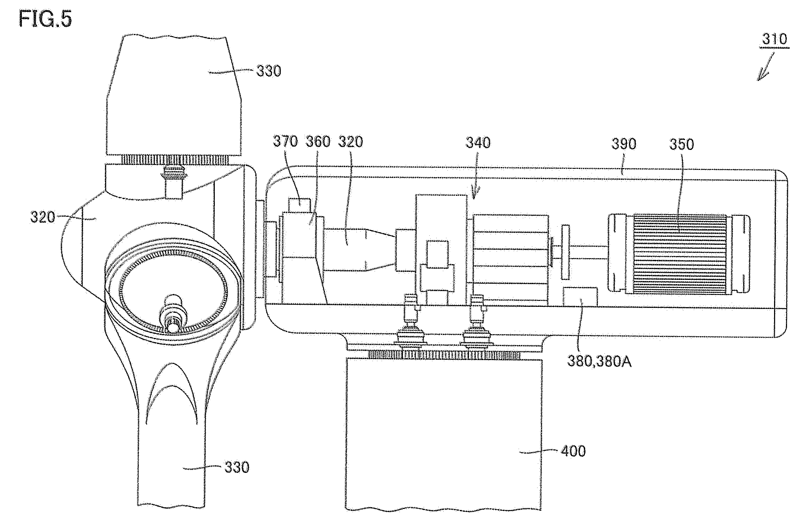

Fig. 5 is a diagram schematically showing a configuration of a wind power generation facility to which the rolling bearing condition monitoring system is applied. Referring to Fig. 5, a wind power generation facility 310 includes a main shaft 320, a blade 330, a gearbox 340, an electric generator 350, a main-shaft bearing device (hereinafter simply referred to as "bearing device") 360, a vibration sensor 370, and a data processor 380. Gearbox 340, generator 350, bearing device 360, vibration sensor 370, and data processor 380 are contained in a nacelle 390, and nacelle 390 is supported by a tower 400.

Main shaft 320 extends into nacelle 390 to be connected to an input shaft of gearbox 340 and rotatably supported by bearing device 360. Main shaft 320 transmits to the input shaft of gearbox 340 a rotational torque generated by blade 330 receiving wind power. Blade 330 is located at the foremost end of main shaft 320, converts the wind power into a rotational torque, and transmits it to main shaft 320.

Bearing device 360 is fixed in nacelle 390 and rotatably supports main shaft 320. Bearing device 360 is made up of a rolling bearing and a housing, and the rolling bearing is herein formed of a ball bearing. Vibration sensor 370 is fixed to bearing device 360. Then, vibration sensor 370 detects vibration of bearing device 360 and outputs the detected value of vibration to data processor 380. Vibration sensor 370 is formed of an acceleration sensor for which a piezoelectric element is used for example.

Gearbox 340 is provided between main shaft 320 and generator 350 for increasing the rotational speed of main shaft 320 and outputting it to generator 350. By way of example, gearbox 340 is formed of a speed-up gear mechanism including a planetary gear, an intermediate shaft, and a high-speed shaft, for example. The inside of gearbox 340 is also provided with a plurality of bearings rotatably supporting a plurality of shafts which, however, are not particularly shown. Generator 350 is connected to an output shaft of gearbox 340 by a coupling portion (joint) for generating electric power from the rotational torque received from gearbox 340. Generator 350 is formed for example of an induction generator. The inside of generator 350 is also provided with a bearing rotatably supporting a rotor.

Data processor 380 is provided in nacelle 390 and receives from vibration sensor 370 the detected value of vibration of bearing device 360. In accordance with a preset program, data processor 380 diagnoses an abnormality of bearing device 360 by means of the vibration waveform of bearing device 360, following a method described later herein.

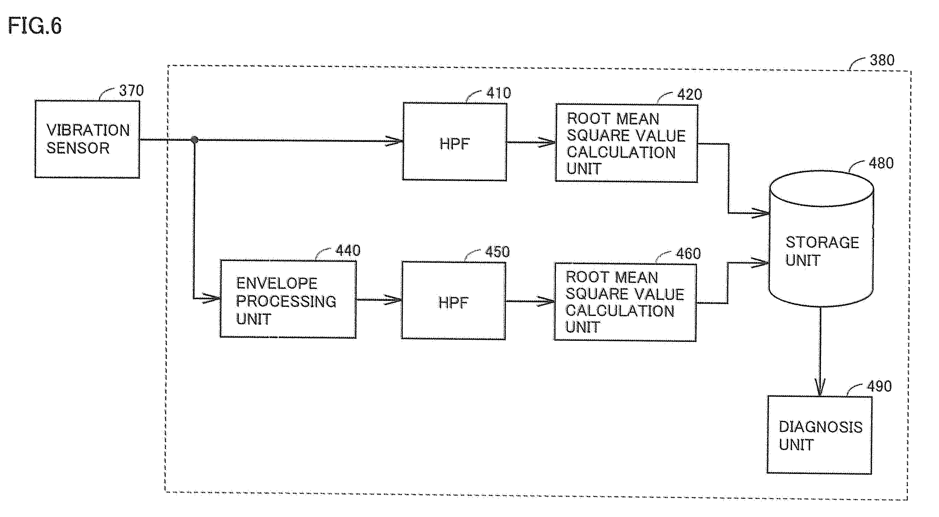

Fig. 6 is a functional block diagram functionally showing a configuration of data processor 380 shown in Fig. 5. Referring to Fig. 6, data processor 380 includes high-pass filters (hereinafter referred to as "HPF") 410, 450, root mean square value calculation units 420, 460, an envelope processing unit 440, a storage unit 480, and a diagnosis unit 490.

HPF 410 receives from vibration sensor 370 the detected value of vibration of bearing device 360. HPF 410 then passes a signal component of the received detected signal that is higher than a predetermined frequency, and blocks a low-frequency component thereof. HPF 410 is provided for removing a DC component included in the vibration waveform of bearing device 360. If the output of vibration sensor 370 does not include a DC component, HPF 410 may not be provided.

Root mean square value calculation unit 420 receives from HPF 410 the vibration waveform of bearing device 360 from which the DC component has been removed. Then, root mean square value calculation unit 420 calculates a root mean square value (also referred to as "RMS value") of the vibration waveform of bearing device 360, and outputs the calculated root mean square value of the vibration waveform to storage unit 480.

Envelope processing unit 440 receives the detected value of vibration of bearing device 360 from vibration sensor 370. Then, envelope processing unit 440 performs envelope processing on the received detected signal to thereby generate an envelope waveform of the vibration waveform of bearing device 360. To the envelope processing operated by envelope processing unit 440, any of a variety of known techniques is applicable. By way of example, the vibration waveform of bearing device 360 which is measured with vibration sensor 370 is rectified to an absolute value and passed through a low-pass filter (LPF) to thereby generate the envelope waveform of the vibration waveform of bearing device 360.

HPF 450 receives from envelope processing unit 440 the envelope waveform of the vibration waveform of bearing device 360. Then, HPF 450 passes a signal component of the received envelope waveform that is higher than a predetermined frequency and blocks a low-frequency component thereof. HPF 450 is provided for removing a DC component included in the envelope waveform and extracting an AC component of the envelope waveform.

Root mean square value calculation unit 460 receives from HPF 450 the envelope waveform from which the DC component has been removed, namely the AC component of the envelope waveform. Then, root mean square value calculation unit 460 calculates the root mean square value (RMS value) of the AC component of the received envelope waveform, and outputs to storage unit 480 the calculated root mean square value of the AC component of the envelope waveform.

Storage unit 480 stores from moment to moment the root mean square value of the vibration waveform of bearing device 360 calculated by root mean square value calculation unit 420 and the root mean square value of the AC component of the envelope waveform thereof calculated by root mean square value calculation unit 460 in synchronization with each other. Storage unit 480 may for example be formed of a readable/writable nonvolatile memory or the like.

Diagnosis unit 490 reads from storage unit 480 the root mean square value of the vibration waveform of bearing device 360 and the root mean square value of the AC component of the envelope waveform thereof that are stored from moment to moment in storage unit 480, and diagnoses an abnormality of bearing device 360, based on the two read root mean square values. Specifically, diagnosis unit 490 diagnoses an abnormality of bearing device 360, based on the transition of the change with time of the root mean square value of the vibration waveform of bearing device 360 and the root mean square value of the AC component of the envelope waveform thereof.

Namely, the root mean square value of the vibration waveform of bearing device 360 calculated by root mean square value calculation unit 420 is the root mean square value of the original vibration waveform on which envelope processing is not done. Therefore, in the case for example of impulse-like vibration where peeling occurs to a part of the race and the amplitude increases only when the rolling element passes the site of peeling, an increase of this value is small. In the case, however, of continuous vibration which occurs due to surface roughness of the contact portion between the race and the rolling element or due to insufficient lubrication, an increase of this value is large.

In contrast, as for the root mean square value of the AC component of the envelope waveform calculated by root mean square value calculation unit 460, an increase of this value is small in the case of continuous vibration which occurs due to surface roughness or insufficient lubrication of the race, while an increase of this value is large in the case of impulse-like vibration. The value, however, may not increase in some cases. In view of this, the root mean square value of the vibration waveform of bearing device 360 and the root mean square value of the AC component of the envelope waveform thereof are used to enable detection of an abnormality that cannot be detected with only one of the root mean square values, and enable more correct diagnosis of an abnormality to be achieved.

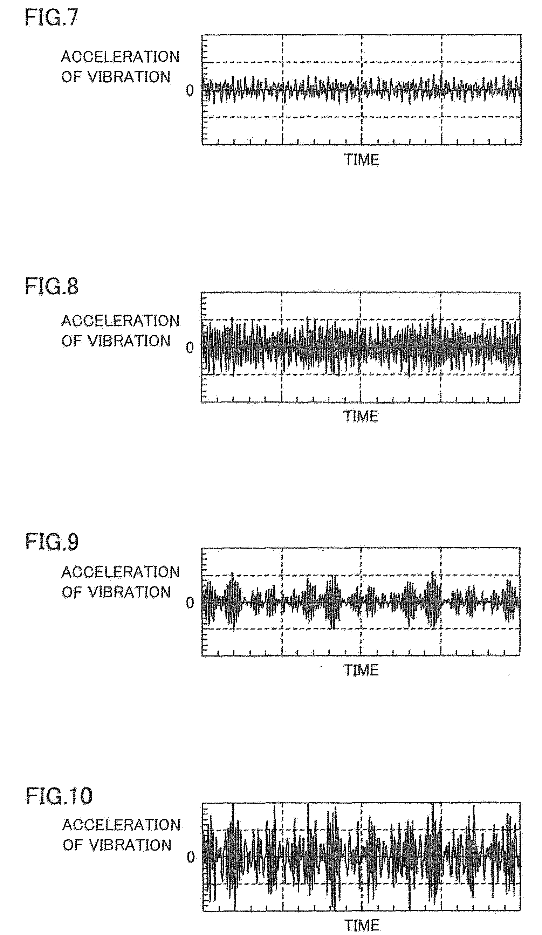

Figs. 7 to 10 are each a diagram showing a vibration waveform of bearing device 360 measured with vibration sensor 370. In Figs. 7 to 10 each, the vibration waveform at the time when the rotational speed of main shaft 320 (Fig. 5) is constant is shown.

Fig. 7 is a diagram showing a vibration waveform of bearing device 360 when no abnormality occurs to bearing device 360. Referring to Fig. 7, the horizontal axis represents the time and the vertical axis represents an indicator of the magnitude of vibration. Here, the vertical axis represents the acceleration of vibration by way of example.

Fig. 8 is a diagram showing a vibration waveform of bearing device 360 exhibited when surface roughness or insufficient lubrication occurs to a race of bearing device 360. Referring to Fig. 8, when surface roughness or insufficient lubrication occurs to the race, the acceleration increases and the state where the acceleration is increased occurs continuously. No conspicuous peak occurs to the vibration waveform. Therefore, as to such a vibration waveform, the root mean square value of the original vibration waveform on which envelope processing is not done exhibits an increase while the root mean square value of the AC component of the envelope waveform does not exhibit such an increase, as compared with the root mean square value (the output of root mean square value calculation unit 420 (Fig. 6)) of the vibration waveform and the root mean square value (the output of root mean square value calculation unit 460 (Fig. 6)) of the AC component of the envelope waveform that are exhibited when no abnormality occurs to bearing device 360.

Fig. 9 is a diagram showing a vibration waveform of bearing device 360 in an initial stage of occurrence of peeling to a race of bearing device 360. Referring to Fig. 9, in the initial stage of the peeling abnormality, peeling occurs to a part of the race and large vibration is generated when the rolling element passes the site of peeling. Therefore, pulse-like vibration periodically occurs with rotation of the shaft. While the rolling element passes the site other than the site of peeling, the increase of the acceleration is small. Therefore, as to such a vibration waveform, the root mean square value of the AC component of the envelope waveform exhibits an increase while the root mean square value of the original vibration waveform does not exhibit such an increase, as compared with the root mean square value of the vibration waveform and the root mean square value of the AC component of the envelope waveform that are exhibited when no abnormality occurs to bearing device 360.

Fig. 10 is a diagram showing a vibration waveform of bearing device 360 exhibited in a terminal stage of the peeling abnormality. Referring to Fig. 10, the terminal stage of the peeling abnormality is a state where peeling is transferred to the whole area of the race and the acceleration increases as a whole while the variation of the amplitude of the acceleration decreases, as compared with the initial stage of the peeling abnormality. Therefore, as to such a vibration waveform, the root mean square value of the original vibration waveform increases while the root mean square value of the AC component of the envelope waveform decreases, as compared with the root mean square value of the vibration waveform and the root mean square value of the AC component of the envelope waveform that are exhibited in the initial stage of the peeling abnormality.

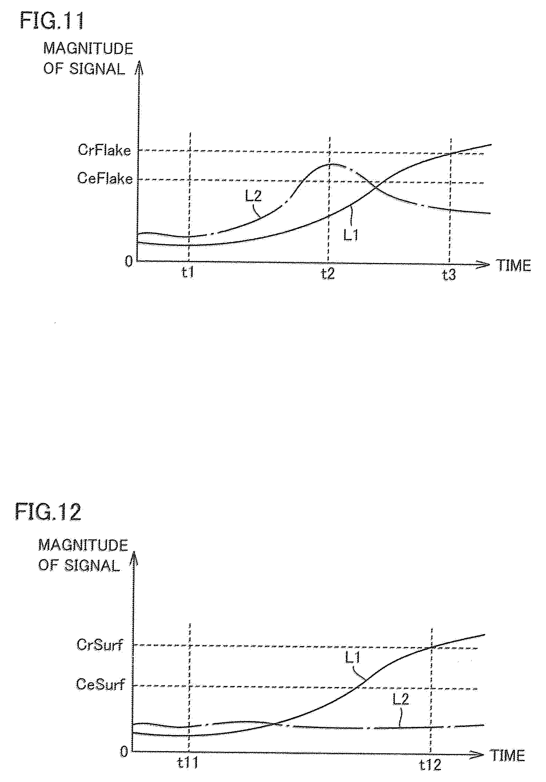

Fig. 11 is a diagram showing changes with time of the root mean square value of the vibration waveform of bearing device 360 and the root mean square value of the AC component of the envelope waveform thereof that are exhibited when peeling occurs to a part of the race of bearing device 360 and the peeling is thereafter transferred to the whole area of the race. In this Fig. 11 and Fig. 12 described below, a change with time of each root mean square value while the rotational speed of main shaft 320 is constant is shown.

Referring to Fig. 11, a curve L1 represents the change with time of the root mean square value of the vibration waveform on which envelope processing is not done, and a curve L2 represents the change with time of the root mean square value of the AC component of the envelope waveform. At time t1 before occurrence of peeling, both the root mean square value (L1) of the vibration waveform and the root mean square value (L2) of the AC component of the envelope waveform are small. The vibration waveforms at time t1 are like the waveform shown in Fig. 7 described above.

When peeling occurs to a part of the race of bearing device 360, the root mean square value (L2) of the AC component of the envelope waveform increases to a significant degree while the root mean square value (L1) of the vibration waveform on which envelope processing is not done does not increase to such a significant degree (in the vicinity of time t2) as described above with reference to Fig. 9.

Further, when the peeling is thereafter transferred to the whole area of the race, the root mean square value (L1) of the vibration waveform on which envelope processing is not done increases significantly while the root mean square value (L2) of the AC component of the envelope waveform decreases (in the vicinity of time t3), as described above with reference to Fig. 10.

Fig. 12 is a diagram showing changes with time of the root mean square value of the vibration waveform of bearing device 360 and the root mean square value of the AC component of the envelope waveform thereof that are exhibited when surface roughness or insufficient lubrication occurs to the race of bearing device 360. Referring to Fig. 12, in Fig. 12 like Fig. 11, a curve L1 represents the change with time of the root mean square value of the vibration waveform on which envelope processing is not done, and a curve L2 represents the change with time of the root mean square value of the AC component of the envelope waveform.

At time t11 before occurrence of the surface roughness or insufficient lubrication of the race, both the root mean square value (L1) of the vibration waveform and the root mean square value (L2) of the AC component of the envelope waveform are small. The vibration waveform at time t11 is like the waveform shown in Fig. 7 described above.

When surface roughness or insufficient lubrication occurs to the race of bearing device 360, the root mean square value (L1) of the vibration waveform on which envelope processing is not done increases while the root mean square value (L2) of the AC component of the envelope waveform does not increase (in the vicinity of time t12), as described above with reference to Fig. 8.

As seen from the above, based on the root mean square value of the vibration waveform of bearing device 360 measured with vibration sensor 370 and the root mean square value of the AC component of the envelope waveform which is generated by envelope processing of the vibration waveform measured with vibration sensor 370, the abnormality of bearing device 360 can be diagnosed. Accordingly, a more accurate abnormality diagnosis can be conducted relative to the conventional technique based on frequency analysis.

It is necessary for execution of such an abnormality diagnosis to appropriately set the threshold value of vibration for conducting the abnormality diagnosis. This threshold value can be determined by means of vibration analyzer 100 as described above. Namely, vibration analyzer 100 can provide a model of bearing device 360 and provide damage data about the bearing to thereby predict the vibration waveform at a location where vibration sensor 370 is placed on bearing device 360. Then, the root mean square value of the vibration waveform as well as the root mean square value of the AC component of the envelope waveform generated by envelope processing of the vibration waveform can be calculated to thereby appropriately determine the threshold value used for making a determination about an abnormality by the condition monitoring system.

It should be noted that a change of the rotational speed of main shaft 320 (Fig. 5) causes a change of the magnitude of vibration of bearing device 360. In general, the vibration of bearing device 360 increases with the increase of the rotational speed of main shaft 320. In view of this, each of the root mean square value of the vibration waveform of bearing device 360 and the root mean square value of the AC component of the envelope waveform thereof may be normalized with the rotational speed of main shaft 320, and each of the normalized root mean square values may be used to execute an abnormality diagnosis for bearing device 360.

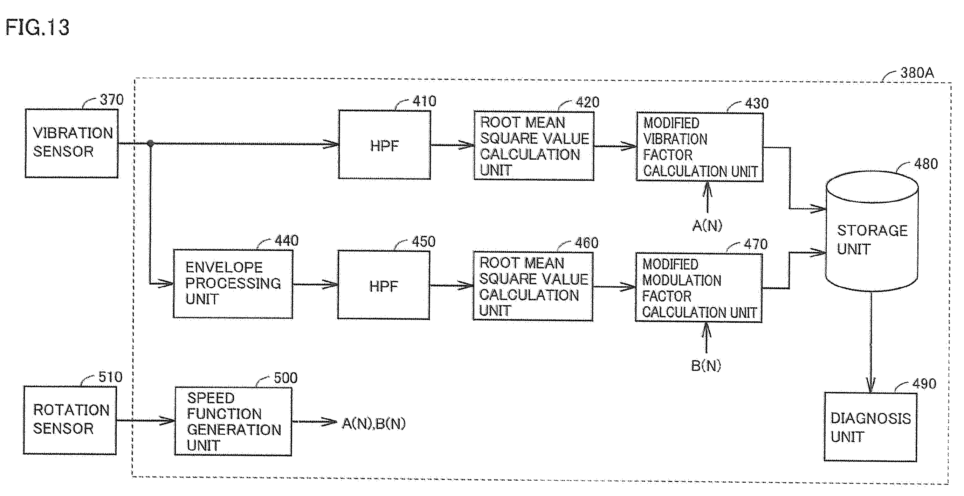

Fig. 13 is a functional block diagram functionally showing another configuration of the data processor. Referring to Fig. 13, a data processor 380A further includes, relative to the configuration of data processor 380 shown in Fig. 6, a modified vibration factor calculation unit 430, a modified modulation factor calculation unit 470, and a speed function generation unit 500.

Speed function generation unit 500 receives a detected value of the rotational speed of main shaft 320 detected by a rotation sensor 510 (not shown in Fig. 5). Rotation sensor 510 may output the detected value of the rotational position of main shaft 320 and speed function generation unit 500 may then calculate the rotational speed of main shaft 320. Speed function generation unit 500 generates a speed function A(N) for normalizing, with rotational speed N of main shaft 320, the root mean square value of the vibration waveform of bearing device 360 calculated by root mean square value calculation unit 420, and a speed function B(N) for normalizing, with rotational speed N of main shaft 320, the root mean square value of the AC component of the envelope waveform calculated by root mean square value calculation unit 460. By way of example, speed functions A(N), B(N) are represented by the following formulas:

$$A(N) = a \times N^{-0.5} \dots (1)$$

$$B(N) = b \times N^{-0.5} \dots (2)$$

where a, b are constants determined in advance through an experiment or the like, and may be values different from or identical to each other.

Modified vibration factor calculation unit 430 receives the root mean square value of the vibration waveform of bearing device 360 from root mean square value calculation unit 420 and receives speed function A(N) from speed function generation unit 500. Then, modified vibration factor calculation unit 430 uses speed function A(N) to calculate a value (hereinafter also referred to as "modified vibration factor") by normalizing, with the rotational speed of main shaft 320, the root mean square value of the vibration waveform calculated by root mean square value calculation unit 420. Specifically, root mean square value Vr of the vibration waveform calculated by root mean square value calculation unit 420 and speed function A(N) are used to calculate modified vibration factor Vr* in accordance with the following formula.

$$Vr^* = A(N)\sqrt{\frac{\int_0^T \{Vr(t) - Vra\}^2 \, dt}{T}} \qquad \dots (3)$$

Here, Vra represents an average of Vr in time 0 to T. Then, modified vibration factor calculation unit 430 outputs to storage unit 480 modified vibration factor Vr* calculated in accordance with formula (3).

Modified modulation factor calculation unit 470 receives the root mean square value of the AC component of the envelope waveform from root mean square value calculation unit 460 and receives speed function B(N) from speed function generation unit 500. Then, modified modulation factor calculation unit 470 uses speed function B(N) to calculate a value (hereinafter also referred to as "modified modulation factor") by normalizing, with the rotational speed of main shaft 320, the root mean square value of the AC component of the envelope waveform calculated by root mean square value calculation unit 460. Specifically, root mean square value Ve of the AC component of the envelope waveform calculated by root mean square value calculation unit 460 and speed function B(N) are used to calculate modified modulation factor Ve* in accordance with the following formula.

$$Ve^* = B(N)\sqrt{\frac{\int_0^T \{Ve(t) - Vea\}^2 \, dt}{T}} \qquad \dots (4)$$

Here, Vea is an average of Ve in time 0 to T. Modified modulation factor calculation unit 470 outputs to storage unit 480 modified modulation factor Ve* calculated in accordance with formula (4).

Then, modified vibration factor Vr* and modified modulation factor Ve* stored from moment to moment in storage unit 480 are read by diagnosis unit 490. Based on the transition of the change with time of the read modified vibration factor Vr* and modified modulation factor Ve*, diagnosis unit 490 conducts an abnormality diagnosis of bearing device 360.

It should be noted that the above-described rotation sensor 510 may be attached to main shaft 320 or a rotation-sensor-incorporated bearing which is bearing device 360 in which rotation sensor 510 is incorporated may be used as bearing device 360.

With the configuration as described above, an abnormality is diagnosed based on modified vibration factor Vr* which is determined by normalizing the root mean square value of the vibration waveform of bearing device 360 with the rotational speed, and modified modulation factor Ve* which is determined by normalizing the root mean square value of the AC component of the envelope waveform with the rotational speed. Therefore, disturbance due to variation of the rotational speed is removed and accordingly a more accurate abnormality diagnosis is implemented.

In the first embodiment as seen from the above, damage data about rolling bearing 20 to be analyzed is input to vibration analyzer 100, and the dynamics analysis program is used to calculate the history of the displacement between the inner and outer rings which occurs to the rolling bearing due to damage when the rotational shaft of rolling bearing 20 is rotated. Then, to the vibration characteristics model of bearing device 10 calculated by the mode analysis program, the history of the exciting force, which is obtained by multiplying, by the bearing spring constant, the calculated displacement between the inner and outer rings is applied, and the vibration waveform at an arbitrary position (the placement location where the vibration sensor is placed for example) on bearing device 10 is calculated. Accordingly, the vibration waveform of bearing device 10 when damage occurs in the bearing can be predicted. Thus, in accordance with the first embodiment, the results of this prediction can be used by the condition monitoring system for the rolling bearing (bearing device 360) applied to wind power generation facility 310 for example, to appropriately determine the threshold value for making a determination about an abnormality of the rolling bearing.

By way of example, the modified vibration factor and the modified modulation factor measured in an initial normal state of a wind power generation facility are Vr*0 and Ve*0, respectively. Regarding a determination of whether peeling occurs as described above with reference to Fig. 11, when it is confirmed that a rate of increase Ie of the modified modulation factor from the initial state (=Ve*/Ve*0) exceeds a threshold value CeFlake of the modified modulation factor which is used for determining whether peeling occurs and thereafter a rate of increase Ir of the modified vibration factor from the initial state (=Vr*/Vr*0) exceeds a threshold value CrFlake of the modified vibration factor which is used for determining whether peeling occurs, it is determined that peeling occurs. Regarding a determination of whether surface roughness or insufficient lubrication occurs as described above with reference to Fig. 12, when it is confirmed that the rate of increase Ie of the modified modulation factor remains smaller than threshold value CeSurf of the modified modulation factor which is used for determining whether surface roughness occurs while the rate of increase Ir of the modified vibration factor exceeds threshold value CrSurf of the modified vibration factor which is used for determining whether surface roughness occurs, then, it is determined that surface roughness or insufficient lubrication occurs. The threshold values in this case are four threshold values, namely CeFlake, CrFlake, CeSurf, CrSurf.

It should be noted that the above-described threshold values and the determination about an abnormality for which the threshold values are used are given by way of example, and more complicated pattern recognition or the like may alternatively be used. A temperature sensor may additionally be used to distinguish between surface roughness and insufficient lubrication. In any case, it is necessary to use the threshold values for making a determination about an abnormality in the condition where vibration increases.

Further, in vibration analyzer 100, the history of the exciting force, which is obtained by multiplying, by the bearing spring constant, the displacement between the inner and outer rings which occurs due to given damage, is applied to at least one point on the central axis of inner ring 22 of rolling bearing 20. Thus, the prediction, by means of the dynamics analysis program, of the displacement between the inner and outer rings of rolling bearing 20 and of the exciting force based on the displacement and the prediction, by means of the mode analysis program, of the vibration transmission characteristic of bearing device 10 can be combined together to conduct a precise vibration analysis.

[Modification]

According to the above description, the mode analysis method is used for the transient response analysis when the vibration characteristic of bearing device 10 is analyzed. Instead of the mode analysis method, however, a direct integral method may be used. The direct integral method is a technique of successively integrating the calculated variation of the approach amount between the rolling element and the raceway surface and the calculated history of the displacement between the inner and outer rings that are applied to a finite element model of bearing device 10, and is effective in the case where vibration analyzer 100 has adequate arithmetic processing ability.

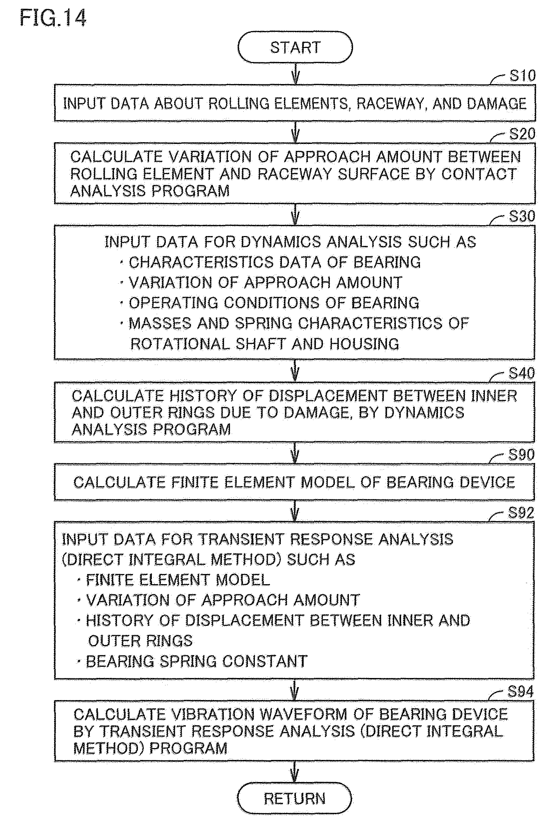

Fig. 14 is a flowchart for illustrating a process procedure of a vibration analysis method executed by vibration analyzer 100 according to this modification. Referring to Fig. 14, this flowchart corresponds to the flowchart shown in Fig. 4 except that the former includes steps S90 to S94 instead of steps S50 to S80 of Fig. 4.

Namely, after the history of the displacement between the inner and outer rings occurring to rolling bearing 20 is calculated in step S40, vibration analyzer 100 calculates a finite element model of bearing device 10 based on characteristics data of bearing device 10 (including the shape, the material density, the Young's modulus, and the Poisson's ratio, for example, of bearing device 10) (step S90). Subsequently, vibration analyzer 100 reads a variety of data for executing a transient response analysis (direct integral method) of bearing device 10 (step S92). Specifically, vibration analyzer 100 reads the finite element model calculated in step S90, the variation of the approach amount calculated in step S20, and the history of the displacement between the inner and outer rings calculated in step S40, for example.

Then, vibration analyzer 100 calculates the vibration waveform of bearing device 10 in accordance with the prepared transient response analysis (direct integral method) program (step S94). Specifically, vibration analyzer 100 applies the history of the exciting force, which is obtained by multiplying, by the bearing spring constant, the displacement (history) between the inner and outer rings calculated in step S40, to at least one point on the central axis of inner ring 22 of bearing device 10 shown by the finite element model calculated in step S90 to thereby calculate the vibration waveform occurring to bearing device 10 by means of the history of the displacement between the inner and outer rings calculated in step S40.

[Second Embodiment]

In the above-described first embodiment and its modification, rolling bearing 20 is formed of a ball bearing. A second embodiment will be described regarding the case where rolling bearing 20 is formed of a roller bearing.

In the case where rolling bearing 20 is formed of a roller bearing, the history of the displacement between the inner and outer rings occurring to rolling bearing 20 is calculated by a dynamics analysis model for which the so-called slice method is used. The slice method is characterized by that the contact load is calculated for each of minute-width sections obtained by slicing a contact portion between a roller and the raceway surface along the axial direction of the roller, into sections each having a minute width.

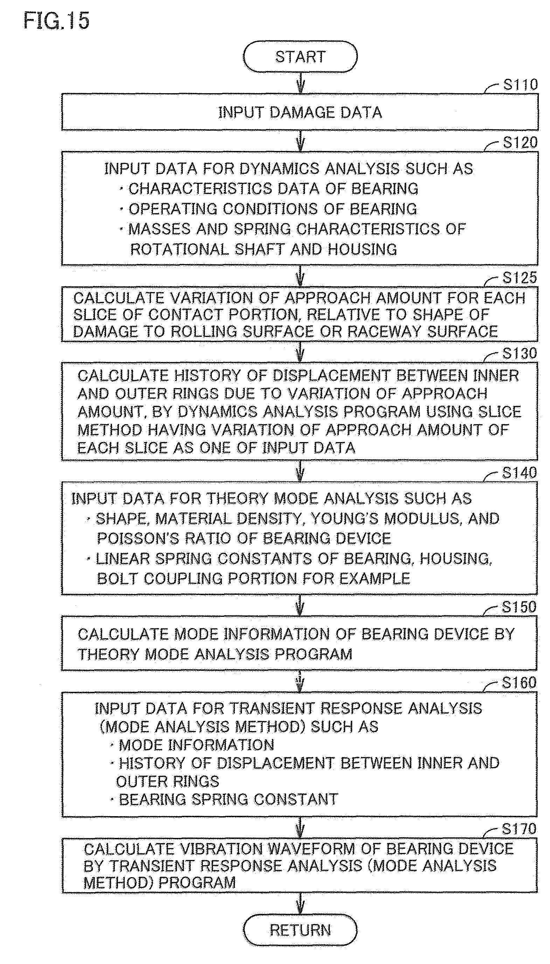

Fig. 15 is a flowchart for illustrating a process procedure of the vibration analysis method executed by vibration analyzer 100 according to the second embodiment. Referring to Fig. 15, initially vibration analyzer 100 reads from input unit 110 data about rolling elements 24 and their raceway as well as damage which is the data about damage given to rolling bearing 20 (step S110).

Subsequently, vibration analyzer 100 reads a variety of data for conducting the dynamics analysis (step S120). Specifically, vibration analyzer 100 reads data from input unit 110, such as the characteristics data, the shape of damage, and the operating conditions of rolling bearing 20, as well as data about the masses and the spring characteristics of rotational shaft 12 and housing 30.

Then, after a variety of data is read in step S120, vibration analyzer 100 converts, for each slice of the contact portion between the roller and the raceway surface, the shape of damage to the variation of the approach amount between the roller and the raceway surface (step S125). Here, this conversion is done using, as main variables, the load within the slice and the width, in the rolling direction, of the shape of damage. For this conversion, contact between cylindrical objects may be studied in advance. More specifically, the influence of the rolling-direction width of a depressed portion that is exerted on the relation between the load and the variation of the approach amount may be studied and defined in the form of a function in advance. Then, in accordance with the dynamics analysis program by means of the slice method to which applied the variation of the approach amount of each slice, vibration analyzer 100 calculates the history of the displacement between the inner and outer rings which occurs to rolling bearing 20 due to the damage which is input in step S110 when rotational shaft 12 is operated under the operating conditions which are input in step S120 (step S130).

The process in the subsequent steps S140 to S170 is basically identical to the process in steps S50 to S80 shown in Fig. 4, and therefore, the description thereof will not be repeated.

According to the second embodiment as seen from the above, the vibration waveform of bearing device 10 in the case where damage occurs in the bearing can be predicted, even in the case where rolling bearing 20 is formed of a roller bearing. Consequently, for the condition monitoring system for the rolling bearing applied to a wind power generation facility or the like, the threshold value can appropriately be determined for making a determination about an abnormality of the rolling bearing.

[Third Embodiment]

In this third embodiment, the vibration analyzer also calculates the threshold value used for making a determination about an abnormality of the rolling bearing by the condition monitoring system for the rolling bearing. Namely, the vibration analyzer illustrated in the third embodiment also determines the threshold value of vibration used by the condition monitoring system for making a determination about an abnormality based on a predicted vibration waveform.

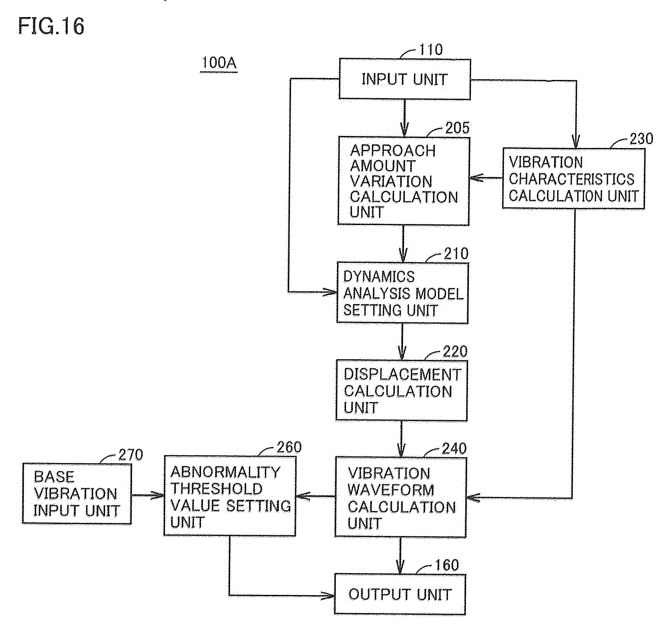

Fig. 16 is a functional block diagram functionally showing a configuration of the vibration analyzer according to the third embodiment. While the following description will exemplarily be given based on the first embodiment, similar addition of functions to the second embodiment can be made as well.

Referring to Fig. 16, a vibration analyzer 100A additionally includes an abnormality threshold value setting unit 260 and a base vibration input unit 270, relative to the configuration of vibration analyzer 100 in the first embodiment shown in Fig. 3.

Base vibration input unit 270 generates a base vibration waveform representing a vibration waveform which is exhibited when rolling bearing 20 is in a normal state. While the base vibration waveform is preferably determined by an actually measured value of a bearing of the same form, it may be an expected value derived from a measured value of a device of the same kind. To this base vibration waveform, a vibration waveform received from vibration waveform calculation unit 240 is added, and the resultant waveform is a vibration waveform which is expected to be exhibited when an abnormality occurs.

Abnormality threshold value setting unit 260 receives from vibration waveform calculation unit 240 a calculated value of a vibration waveform at a location where a vibration sensor is attached to bearing device 10. Then, abnormality threshold value setting unit 260 uses the vibration waveform received from vibration waveform calculation unit 240 and the base vibration waveform received from base vibration input unit 270 to determine a threshold value of the magnitude of vibration for determining that rolling bearing 20 has an abnormality. By way of example, abnormality threshold value setting unit 260 calculates the root mean square value of the vibration waveform and the root mean square value of the AC component of the envelope waveform, from the data about the vibration waveform expected to be exhibited when an abnormality occurs, and determines the threshold value based on the results of the calculation.

The threshold value used for making a determination about an abnormality may be determined by applying, from abnormality threshold value setting unit 260 to displacement calculation unit 220, data about damage of various magnitudes, and calculating the vibration waveform for each damage data which, however, is not particularly shown.

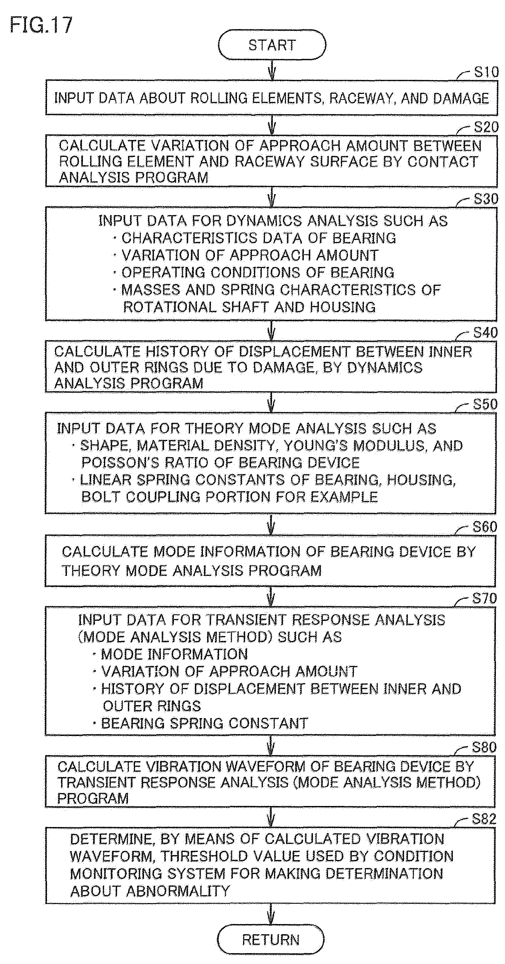

Fig. 17 is a flowchart for illustrating a process procedure of the vibration analysis method executed by vibration analyzer 100A according to the third embodiment. Referring to Fig. 17, this flowchart additionally includes step S82 relative to the flowchart shown in Fig. 4.

In the third embodiment, the vibration waveform at the location where the vibration sensor is attached to bearing device 10 is calculated in step S80. Upon calculation of the vibration waveform in step S80, vibration analyzer 100A uses the calculated vibration waveform to determine the threshold value of the magnitude of vibration which is used by the condition monitoring system for determining that rolling bearing 20 has an abnormality (step S82).

A similar technique to the above may also be used in the above-described second embodiment to determine, based on a vibration waveform predicted by the vibration analyzer, the threshold value of vibration which is used by the condition monitoring system for making a determination about an abnormality, which, however, is not particularly shown.

In the third embodiment as seen from the above, vibration analyzer 100 (100A) can determine the threshold value which is used by the condition monitoring system for the rolling bearing for making a determination about an abnormality of the rolling bearing.

In each of the above-described embodiments, the dynamics analysis is used to calculate the history of the displacement between the inner and outer rings occurring to the rolling bearing, and multiply the displacement between the inner and outer rings by the bearing spring constant to thereby calculate the history of the exciting force applied to the response analysis (vibration analysis). Alternatively, for the sake of simplification of calculation, the history of the exciting force may be calculated based on the result of calculation through a static contact analysis, without using the dynamics analysis.

Specifically, the variation of the approach amount between rolling element 24 and the raceway surface calculated through the contact analysis is defined as a geometrical deformation amount (amount of depression for example) of the raceway surface, and the amount of displacement between the inner and outer rings is calculated based on a static force balance analysis of the whole rolling bearing in consideration of the deformation amount. Then, a value obtained by multiplying this deformation amount between the inner and outer rings by the bearing spring constant is defined as a maximum value of the exciting force occurring to the rolling bearing, and this value is defined as the maximum value of the exciting force in a period in which the rolling element passes a damaged portion, to thereby calculate the waveform (history) of the exciting force. As the shape of the waveform, any of a variety of shapes such as those of sine wave, triangular wave, trapezoidal wave, and rectangular wave may be used.

In each of the above-described embodiments, it is supposed that outer ring 26 which is a stationary ring is connected to housing 30 through linear springs kF1 to kF3 in the radial direction of the bearing at the positions of the rolling elements located within the load-applied area, among a plurality of rolling elements 24, as shown in Fig. 1. It may be supposed, however, that the outer ring is spring-connected to housing 30 in the radial direction of the bearing at the center between the rolling elements located in the load-applied area.

Further, in each of the above-described first and second embodiments and the third embodiment based on them, the history of the exciting force, which is obtained by multiplying, by the bearing spring constant, the displacement between the inner and outer rings occurring due to given damage, is applied to at least one point on the central axis of inner ring 22 of rolling bearing 20. The history of the exciting force, however, may be applied to rolling element 24 within the load-applied area, depending on a share of the force supported by each rolling element 24 within the load-applied area.

Further, in the foregoing description, the threshold value used for making a determination about an abnormality that is determined by means of the results of analysis by the vibration analyzer is applied, by way of example, to the condition monitoring system for the rolling bearing in a wind power generation facility. It can also be applied to other facilities, such as the condition monitoring system for the rolling bearing in a railway vehicle, for example.

[Fourth Embodiment]

In connection with this fourth embodiment, a technique will be illustrated for easily and appropriately selecting a placement position where a vibration sensor is placed on bearing device 10 (the position is hereinafter also referred to as "sensor position"), by a condition monitoring system which monitors the condition (abnormality) of a rolling bearing, using vibration analyzer 100 as described above.

Description of Method for Setting Placement Position of Vibration Sensor

In the following, a description will be given of a method for selecting a placement position where the vibration sensor is placed on bearing device 10, by means of the above-described vibration analysis method. The following description is given exemplarily of a method for selecting a placement position where the vibration sensor is placed on bearing device 10, based on the vibration analysis method in the first embodiment.

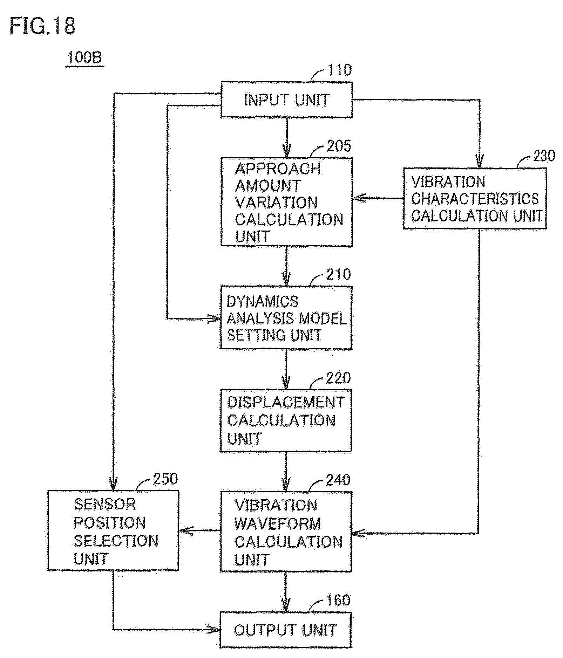

Fig. 18 is a functional block diagram functionally showing a configuration of a vibration analyzer according to the fourth embodiment. Referring to Fig. 18, a vibration analyzer 100B further includes a sensor position selection unit 250 relative to the configuration of vibration analyzer 100 shown in Fig. 3. From input unit 110, data of a plurality of candidate positions which can be set as a placement position of the vibration sensor is input. Vibration analyzer 100B executes the vibration analysis method shown in Fig. 4 to thereby predict, for each of a plurality of candidate positions, a vibration waveform occurring at the candidate position due to damage to rolling bearing 20. From vibration waveform calculation unit 240, a plurality of vibration waveforms calculated for respective plurality of candidate positions are output.

Sensor position selection unit 250 receives from input unit 110 the data of a plurality of candidate positions, and also receives from vibration waveform calculation unit 240 the plurality of vibration waveforms calculated for the respective plurality of candidate positions. Then, sensor position selection unit 250 selects, as a placement position of the vibration sensor, a candidate position corresponding to a vibration waveform with a largest acceleration amplitude of vibration among the plurality of vibration waveforms. Sensor position selection unit 250 outputs the selected placement position to output unit 160.

It should be noted that other features of vibration analyzer 100B are identical to those of vibration analyzer 100 shown in Fig. 3.

Through the processes as described above, the placement position where the vibration sensor is placed on bearing device 10 is selected. These processes can be organized into the following process flow.

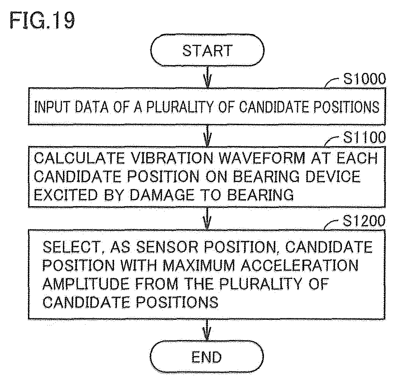

Fig. 19 is a flowchart for illustrating a process procedure of a method for selecting a placement position of a vibration sensor, using the vibration analysis method shown in Fig. 4, according to the fourth embodiment. It should be noted that the flowchart shown in Fig. 19 can be implemented through execution of a program stored in advance in vibration analyzer 100B.

Referring to Fig. 19, initially, from input unit 110, data of a plurality of candidate positions which can be set as a placement position of the vibration sensor is input (step S1000).

Next, reading the data of a plurality of candidate positions from input unit 110, vibration analyzer 100B executes the vibration analysis method to thereby calculate a vibration waveform occurring at each candidate position on bearing device 10 when damage occurs within rolling bearing 20 (step S1100).

Vibration analyzer 100B extracts, from a plurality of vibration waveforms calculated for respective plurality of candidate positions, a vibration waveform with a maximum acceleration amplitude of vibration, and selects the candidate position corresponding to the extracted vibration waveform, as a placement position of the vibration sensor (step S1200).

In this fourth embodiment as described above, the results of analysis by the vibration analysis method can be used to select a placement position where the vibration sensor is placed on the bearing device. Accordingly, as compared with the conventional qualitative selection method, a placement position of the vibration sensor can easily and appropriately be selected.

Further, the vibration waveform at the selected placement position of the vibration sensor can be used to determine a threshold value for making a determination about an abnormality. Therefore, this threshold value can be used to make a determination about an abnormality of a rolling bearing by the above-described condition monitoring system.

In the following, as to the condition monitoring system for a rolling bearing that uses a placement position of the vibration sensor and a threshold value for making a determination about an abnormality that are determined from the results of analysis by vibration analyzer 100B, a condition monitoring system for a rolling bearing in a wind power generation facility will exemplarily be described by way of example.

Description of Method for Selecting Placement Position of Vibration Sensor on Main-Shaft Bearing Device

In the following, a description will be given of a method for selecting a placement position where vibration sensor 370 is placed on main-shaft bearing device 360 (Fig. 5).

Referring again to Fig. 5, when blade 330 receives wind power to rotate in wind power generation facility 310, a load is applied from blade 330 to main shaft 320. This load includes a load generated along an axial direction of main shaft 320 when blade 330 is rotating against wind, and an alternating load and an unbalanced load caused by rotation of a rotary portion including blade 330, for example. These loads vary with the wind which is varying all the time. Main shaft 320 is caused to vibrate by an exciting force which is the load applied from blade 330. The exciting force applied to main shaft 320 is transmitted to bearing device 360 to excite bearing device 360 to vibrate.

Thus, the exciting force occurring to main shaft 320 is received by bearing device 360 to excite vibration (noise) of bearing device 360. The vibration caused by the exciting force from main shaft 320 is superimposed on vibration caused due to damage to the rolling bearing. Therefore, when a large load is applied and accordingly a large exciting force occurs to main shaft 320, the detection sensitivity of vibration sensor 370 is deteriorated due to an influence of the noise, which makes it difficult to detect vibration of bearing device 360 in the case where damage occurs to the rolling bearing. As a result, there is a possibility that the condition monitoring system cannot conduct an accurate abnormality diagnosis for bearing device 360.

In view of this, when a placement position of vibration sensor 370 is to be selected, the magnitude of vibration occurring at a placement position of vibration sensor 370 is calculated in consideration of an influence of vibration (noise) caused by the exciting force from main shaft 320, on the detection sensitivity of vibration sensor 370, in addition to a vibration waveform of bearing device 360 calculated by the above-described vibration analysis method. If vibration sensor 370 can be placed at a position where the influence of noise is small, vibration sensor 370 can detect, with a high sensitivity, vibration caused due to damage to the bearing.

In this fourth embodiment, the magnitude of an influence of noise on the detection sensitivity of vibration sensor 370 is evaluated by means of the so-called SN ratio (Signal to Noise ratio). The SN ratio for main-shaft bearing device 360 is calculated as a ratio of an acceleration amplitude of vibration of bearing device 360 that is excited due to damage to the bearing, to an acceleration amplitude of vibration (noise) of bearing device 360 that is excited due to an exciting force occurring to main shaft 320. Then, based on the calculated SN ratio, a placement position of vibration sensor 370 is selected.

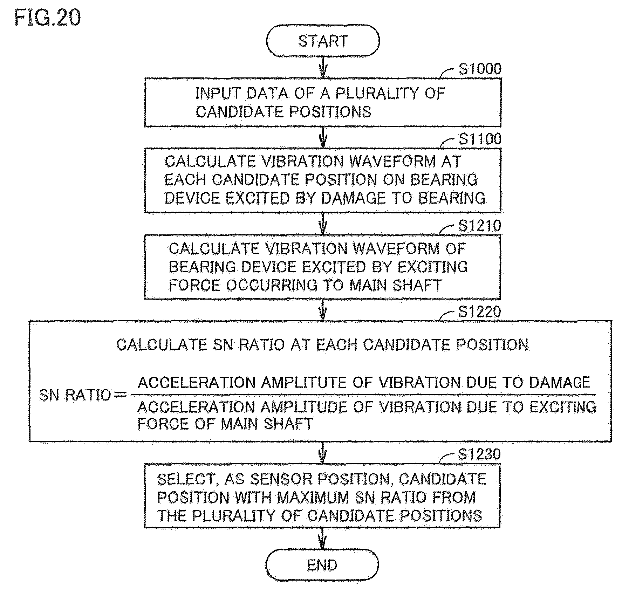

Fig. 20 is a flowchart for illustrating a process procedure of a method for selecting a placement position where vibration sensor 370 is placed on bearing device 360 shown in Fig. 5, according to the fourth embodiment. The flowchart shown in Fig. 20 is given for implementing step S1200 (selection of a sensor position) in the flowchart shown in Fig. 19, by a process through steps S1210 to S1230. It should be noted that the flowchart shown in Fig. 20 can be implemented through execution of a program stored in advance in data processor 380. In connection with the present embodiment, a description will be given, by way of example, of a configuration where data processor 380 has the function of sensor position selection unit 250 (Fig. 18).

Referring to Fig. 20, initially, from an input unit (not shown) of data processor 380, data of a plurality of candidate positions which can be set as a placement position where vibration sensor 370 is placed on bearing device 360 is input (step S1000).

Next, reading the data of a plurality of candidate positions from the input unit, data processor 380 calculates a vibration waveform occurring at each candidate position on bearing device 360 when damage occurs within a rolling bearing (step S1100).

Subsequently, data processor 380 calculates a vibration waveform of bearing device 360 excited by an exciting force occurring to main shaft 320 (step S1210). For example, data processor 380 calculates a load (exciting force) applied to main shaft 320, using data about the shape of blade 330, the wind speed, and the rotational speed, for example. Then, data processor 380 conducts a response analysis by means of a vibration characteristics model of bearing device 360 to thereby calculate a vibration waveform occurring to bearing device 360 that is caused by the calculated exciting force.

Next, data processor 380 calculates an SN ratio at each candidate position, using the vibration waveform occurring at each candidate position on bearing device 360 that is calculated in step S1100 and the vibration waveform of bearing device 360 that is calculated in step S1210 (step S1220). Accordingly, a plurality of SN ratios are calculated for respective plurality of candidate positions.

Next, data processor 380 extracts an SN ratio having a largest value from the calculated plurality of SN ratios. The candidate position corresponding to the extracted SN ratio is selected as a placement position of vibration sensor 370 (step S1230).

The process flow in Fig. 20 is illustrated above in connection with the case where the SN ratio is calculated by a method according to which the vibration waveform of the bearing device caused by damage to the bearing and the vibration waveform of the bearing device caused by an exciting force of main shaft 320 are calculated separately. Alternatively, under the condition that an exciting force caused by damage to the bearing and an exciting force from main shaft 20 are applied simultaneously to the bearing device, a vibration waveform of the bearing device caused by each of the exciting forces may be calculated.

In this way, from a plurality of candidate positions, a candidate position with a minimum influence of noise is selected as a placement position of vibration sensor 370. Accordingly, vibration sensor 370 can detect, with a high sensitivity, vibration of bearing device 360 in the case where damage occurs to the rolling bearing.

Moreover, a placement position of vibration sensor 370 can be selected by means of the results of an analysis through the vibration analysis method and the results of a response analysis using an exciting force occurring to main shaft 320, and therefore, as compared with the conventional qualitative selection method, a placement position of vibration sensor 370 can easily and appropriately be selected.

Regarding the method for selecting a placement position where the vibration sensor is placed on bearing device 10, data of a vibration waveform which is output from output unit 160 of the vibration analyzer may be used to select, externally to the condition monitoring system, a position where the vibration sensor is placed, which, however, is not particularly shown.

While the foregoing description is based exemplarily on the first embodiment, the functions may be added to the second and third embodiments in a similar manner to the above-described one.

In the fourth embodiment as seen from the above, the result of prediction of a vibration waveform calculated for an arbitrary position on bearing device 10 can be used to easily and appropriately select a placement position where vibration sensor 370 is placed on bearing device 360, by the condition monitoring system for a rolling bearing (bearing device 360) applied for example to wind power generation facility 310.

[Other Applications of Condition Monitoring System for Rolling Bearing]

In connection with the foregoing embodiments each, the above description is given of the condition monitoring system for main-shaft bearing device 360 of wind power generation facility 310 (Fig. 5). The condition monitoring system for a rolling bearing of the present invention, however, is also applicable to other bearing devices in wind power generation facility 310. For example, the condition monitoring system for a rolling bearing of the present invention is also applicable to a plurality of bearings provided in gearbox 340 for rotatably supporting a plurality of shafts of a speed-up gear mechanism (the bearings are also referred to as "gearbox bearing device" hereinafter), or a bearing provided in generator 350 for rotatably supporting the rotor (the bearing is also referred to as "generator bearing device" hereinafter).

In the following, regarding the case where the condition monitoring system for a rolling bearing of the present invention is applied to the gearbox bearing device and to the generator bearing device, a description will be given of a method for selecting a placement position of a vibration sensor on each bearing device.

Description of Method for Selecting Placement Position of Vibration Sensor on Gearbox Bearing Device

In a speed-up gear mechanism forming gearbox 340, a mesh transmission error occurs to a pair of gears, due to difference in gear precision, assembly error of the gears, and variation of the stiffness of gear teeth where the gear teeth mesh. This mesh transmission error of the pair of gears causes vibration of the portion where the gears mesh. An exciting force occurring to the gear mesh portion is transmitted to the bearing device to thereby excite the bearing device to vibrate. Thus, in the gearbox bearing device, the exciting force occurring to the gear mesh portion excites vibration (noise), and therefore, there is a possibility that the detection sensitivity of the vibration sensor is deteriorated due to an influence of the noise.

In view of this, when a placement position of the vibration sensor is to be selected, the magnitude of vibration occurring at a placement position of the vibration sensor is calculated in consideration of an influence of vibration (noise) caused by the exciting force from the gear mesh portion of the gears, on the detection sensitivity of the vibration sensor, in addition to a vibration waveform of the gearbox bearing device calculated by the vibration analysis method, in accordance with a similar technique to that for the above-described main-shaft bearing device. Specifically, the SN ratio of the gearbox bearing device is calculated, and a placement position of the vibration sensor is selected based on the calculated SN ratio.

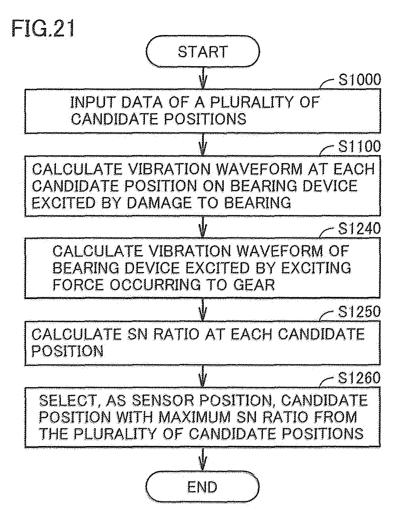

Fig. 21 is a flowchart for illustrating a process procedure of a method for selecting a placement position where the vibration sensor is placed on the gearbox bearing device. The flowchart shown in Fig. 21 is given for implementing step S1200 (selection of a sensor position) in the flowchart shown in Fig. 19, by a process through steps S 1240 to S 1260.

It should be noted that the flowchart shown in Fig. 21 can be implemented through execution of a program stored in advance in data processor 380 (Fig. 5). Alternatively, data of a vibration waveform which is output from data processor 380 may be used to execute the flowchart externally to the condition monitoring system. In connection with the present embodiment, a description will be given, by way of example, of a configuration where data processor 380 has the function of sensor position selection unit 250 (Fig. 18).

Referring to Fig. 21, initially, from an input unit (not shown) of data processor 380, data of a plurality of candidate positions which can be set as a placement position where the vibration sensor is placed on the gearbox bearing device is input (step S1000).

Next, reading the data of a plurality of candidate positions from the input unit, data processor 380 calculates, by executing the vibration analysis method, a vibration waveform occurring at each candidate position on the gearbox bearing device when damage occurs within a rolling bearing (step S1100).

Subsequently, data processor 380 calculates a vibration waveform of the gearbox bearing device excited by an exciting force occurring to the gear mesh portion where gears forming the speed-up gear mechanism mesh (step S1240). For example, data processor 380 calculates a mesh transmission error using the stiffness of a pair of gears, and calculates an exciting force occurring to the gear mesh portion based on the calculated mesh transmission error.

Then, data processor 380 conducts a response analysis by means of a vibration characteristics model of the bearing device to thereby calculate a vibration waveform occurring to the gearbox bearing device that is caused by the calculated exciting force.

Next, data processor 380 calculates an SN ratio at each candidate position, using the vibration waveform occurring at each candidate position on the gearbox bearing device that is calculated in step S1100 and the vibration waveform of the gearbox bearing device that is calculated in step S1240 (step S1250). Accordingly, a plurality of SN ratios are calculated for respective plurality of candidate positions.

Data processor 380 extracts an SN ratio having a largest value from the plurality of SN ratios. The candidate position corresponding to the extracted SN ratio is selected as a placement position of the vibration sensor (step S1260).

In this way, from a plurality of candidate positions, a candidate position with a minimum influence of noise is selected as a placement position of the vibration sensor. Accordingly, the vibration sensor can detect, with a high sensitivity, vibration of the gearbox bearing device in the case where damage occurs to the rolling bearing.

Moreover, a placement position of the vibration sensor can be selected by means of the results of an analysis through the vibration analysis method and the results of a response analysis using an exciting force occurring to the gears, and therefore, as compared with the conventional qualitative selection method, a placement position of the vibration sensor can easily and appropriately be selected.

Description of Method for Selecting Placement Position of Vibration Sensor on Generator Bearing Device

In wind power generation facility 310 (Fig. 5), the torque of electric generator 350 varies with variation of the rotational speed of a rotary portion including blade 330. The variation of the rotational speed is caused not only by a change of the wind speed, but also by an influence of the tower shadow effect which is a temporary decrease of the speed due to crossing of blade 330 and tower 400, or wind shear which occurs due to a difference in wind power at the position where a plurality of huge blades 330 rotate, even when the wind speed is constant. The variation of the torque of generator 350 causes an exciting force (torsional vibration for example), at a coupling portion connecting generator 350 and gearbox 340, in the rotational direction of the coupling portion. The exciting force occurring to this coupling portion is transmitted to the generator bearing device to thereby excite vibration of the generator bearing device. Thus, in the generator bearing device, the exciting force occurring to the coupling portion excites vibration (noise), and therefore, there is a possibility that the detection sensitivity of the vibration sensor is deteriorated due to an influence of the noise.

In view of this, when a placement position of the vibration sensor is to be selected, the magnitude of vibration occurring at a placement position of the vibration sensor is calculated in consideration of an influence of vibration (noise) caused by the exciting force from the coupling portion, on the detection sensitivity of the vibration sensor, in addition to a vibration waveform of the generator bearing device calculated by the vibration analysis method, in accordance with a similar technique to that for the above-described main-shaft bearing device. Specifically, the SN ratio of the generator bearing device is calculated, and a placement position of the vibration sensor is selected based on the calculated SN ratio.

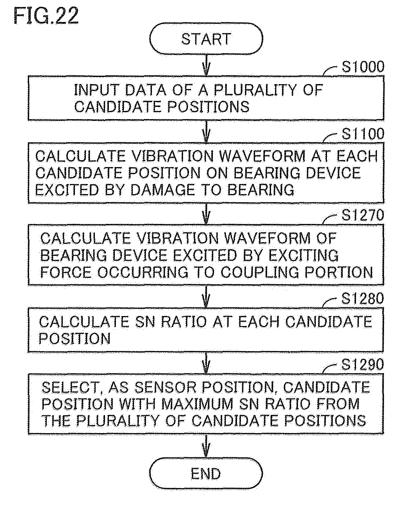

Fig. 22 is a flowchart for illustrating a process procedure of a method for selecting a placement position where the vibration sensor is placed on the generator bearing device. The flowchart shown in Fig. 22 is given for implementing step S1200 (selection of a sensor position) in the flowchart shown in Fig. 19, by a process through steps S1270 to S1290.

It should be noted that the flowchart shown in Fig. 22 can be implemented through execution of a program stored in advance in data processor 380 (Fig. 5). Alternatively, data of a vibration waveform which is output from data processor 380 may be used to execute the flowchart externally to the condition monitoring system. In connection with the present embodiment, a description will be given, by way of example, of a configuration where data processor 380 has the function of sensor position selection unit 250 (Fig. 18).

Referring to Fig. 22, initially, from an input unit (not shown) of data processor 380, data of a plurality of candidate positions which can be set as a placement position where the vibration sensor is placed on the generator bearing device is input (step S1000).

Next, reading the data of a plurality of candidate positions from the input unit, data processor 380 calculates, by executing the vibration analysis method, a vibration waveform occurring at each candidate position on the generator bearing device when damage occurs within a rolling bearing (step S1100).

Subsequently, data processor 380 calculates a vibration waveform of the generator bearing device excited by an exciting force occurring to the coupling portion (step S1270). For example, data processor 380 calculates an exciting force acting in the rotational direction of the coupling portion due to variation of the torque of generator 350. Then, data processor 380 conducts a response analysis by means of a vibration characteristics model of the bearing device to thereby calculate a vibration waveform occurring to the generator bearing device that is caused by the calculated exciting force.

Next, data processor 380 calculates an SN ratio at each candidate position, using the vibration waveform occurring at each candidate position on the generator bearing device that is calculated in step S1100 and the vibration waveform of the generator bearing device that is calculated in step S1270 (step S1280). Accordingly, a plurality of SN ratios are calculated for respective plurality of candidate positions.

Data processor 380 extracts an SN ratio having a largest value from the plurality of SN ratios. The candidate position corresponding to the extracted SN ratio is selected as a placement position of the vibration sensor (step S1290).

In this way, from a plurality of candidate positions, a candidate position with a minimum influence of noise is selected as a placement position of the vibration sensor. Accordingly, the vibration sensor can detect, with a high sensitivity, vibration of the generator bearing device in the case where damage occurs to the rolling bearing.

Moreover, a placement position of the vibration sensor can be selected by means of the results of an analysis through the vibration analysis method and the results of a response analysis using an exciting force occurring to the gears, and therefore, as compared with the conventional qualitative selection method, a placement position of the vibration sensor can easily and appropriately be selected.

It should be noted that the foregoing method for setting a placement position of the vibration sensor by means of the results of an analysis by the vibration analyzer is applicable not only to the condition monitoring system for a rolling bearing in a wind power generation facility, but also to the condition monitoring system for a rolling bearing in a railway vehicle.

The embodiments disclosed herein are also intended to be implemented in combination as appropriate. It should be construed that the embodiments disclosed herein are given by way of illustration in all respects, not by way of limitation. It is intended that the scope of the present invention is defined by claims, not by the above description of the embodiments, and encompasses all modifications and variations equivalent in meaning and scope to the claims.

REFERENCE SIGNS LIST

10 bearing device; 12 rotational shaft; 20 rolling bearing; 22 inner ring; 24 rolling element; 26 outer ring; 30 housing; 40 base; 100, 100A, 100B vibration analyzer; 110 input unit; 120 I/F unit; 130 CPU; 140 RAM; 150 ROM; 160 output unit; 205 approach amount variation calculation unit; 210, 210A dynamics analysis model setting unit; 220 displacement calculation unit; 230, 250 vibration characteristics calculation unit; 240, 240A vibration waveform calculation unit; 250 sensor position selection unit; 260 abnormality threshold value setting unit; 270 base vibration input unit; 310 wind power generation facility; 320 main shaft; 330 blade; 340 gearbox; 350 generator; 360 bearing; 370 vibration sensor; 380, 380A data processor; 390 nacelle; 400 tower; 410, 450 HPF; 420, 460 root mean square value calculation unit; 430 modified vibration factor calculation unit; 440 envelope processing unit; 470 modified modulation factor calculation unit; 480 storage unit; 490 diagnosis unit; 500 speed function generation unit; 510 rotation sensor

**Claims**

1. A bearing device vibration analysis method for analyzing vibration of a bearing device by a computer, the bearing device including a rolling bearing and a housing of the rolling bearing, the method comprising the steps of:

   inputting data about a shape of damage given to a contact portion between a rolling element and a raceway surface of the rolling bearing;
   calculating a displacement between an inner ring and an outer ring of the rolling bearing caused by the damage;
   calculating a vibration characteristics model by a mode analysis program for analyzing a vibration mode of the bearing device, the vibration characteristics model representing a vibration characteristic of the bearing device; and
   calculating a vibration waveform at a predetermined position on the bearing device by applying, to the vibration characteristics model, a history of an exciting force occurring to the rolling bearing, the history of the exciting force being obtained by multiplying the displacement calculated in the step of calculating a displacement, by a spring constant between the inner ring and the outer ring.

2. The bearing device vibration analysis method according to claim 1, wherein in the step of calculating a vibration waveform, the history of the exciting force is applied to at least one point on a central axis of a rotational ring of the rolling bearing in the vibration characteristics model.

3. The bearing device vibration analysis method according to claim 1, further comprising the step of determining a threshold value of a magnitude of vibration for determining that the rolling bearing has an abnormality, using the vibration waveform calculated in the step of calculating a vibration waveform.

4. The bearing device vibration analysis method according to any one of claims 1 to 3, wherein the step of calculating a displacement includes the step of calculating, by a dynamics analysis program for conducting a dynamics analysis of the rolling bearing, a history of the displacement caused by the damage during rotation of a rotational shaft of the rolling bearing.

5. The bearing device vibration analysis method according to claim 4, wherein
the rolling bearing is a ball bearing, and
the step of calculating a history of the displacement includes the steps of:

> calculating, by a contact analysis program for analyzing contact between a rolling element and a raceway surface of the rolling bearing, a variation of an approach amount between the rolling element and the raceway surface caused by the given damage; and
> calculating, by the dynamics analysis program, the history of the displacement caused by the variation of the approach amount during rotation of a rotational shaft of the rolling bearing.

6. The bearing device vibration analysis method according to claim 4, wherein
the rolling bearing is a roller bearing,
for the dynamics analysis program, a slice method is used by which a contact load is calculated for each of minute-width sections which are obtained by slicing a contact portion between a roller and a raceway surface along an axial direction of the roller,
the bearing device vibration analysis method further comprises the step of calculating, for each slice, a variation of an approach amount between the roller and the raceway surface caused by the given damage, and
the step of calculating a history of the displacement includes the step of calculating the history of the displacement by the dynamics analysis program for which the slice method is used.

7. The bearing device vibration analysis method according to claim 4, wherein in the step of calculating a history of the displacement, it is supposed that a stationary ring of the rolling bearing is connected to the housing through a linear spring in a bearing radial direction at a position of a rolling element within a load-applied area.

8. The bearing device vibration analysis method according to claim 4, wherein in the step of calculating a vibration waveform, the history of the displacement is applied to a rolling element within a load-applied area, depending on a share of a force supported by each rolling element within the load-applied area.

9. A bearing device vibration analyzer for analyzing vibration of a bearing device including a rolling bearing and a housing of the rolling bearing, comprising:

> an input unit configured to input data about a shape of damage given to a contact portion between a rolling element and a raceway surface of the rolling bearing;
> a displacement calculation unit configured to calculate a displacement between an inner ring and an outer ring of the rolling bearing caused by the damage;
> a vibration characteristics calculation unit configured to calculate a vibration characteristics model by a mode analysis program for analyzing a vibration mode of the bearing device, the vibration characteristics model representing a vibration characteristic of the bearing device; and
> a vibration waveform calculation unit configured to calculate a vibration waveform at a predetermined position on the bearing device by applying, to the vibration characteristics model calculated by the vibration characteristics calculation unit, a history of an exciting force occurring to the rolling bearing, the history of the exciting force being obtained by multiplying the displacement calculated by the displacement calculation unit, by a spring constant between the inner ring and the outer ring.

10. The bearing device vibration analyzer according to claim 9, wherein the displacement calculation unit calculates, by a dynamics analysis program for conducting a dynamics analysis of the rolling bearing, a history of the displacement caused by the damage during rotation of a rotational shaft of the rolling bearing.

11. A rolling bearing condition monitoring system comprising:

> a vibration sensor configured to measure vibration of a bearing device including a rolling bearing and a housing of the rolling bearing; and
> a determination unit configured to determine that the rolling bearing has an abnormality when a magnitude of the vibration measured with the vibration sensor exceeds a predetermined threshold value,
the predetermined threshold value being determined by using a vibration waveform calculated according to a vibration analysis method for analyzing vibration of the bearing device by a computer, and
the vibration analysis method including the steps of:

inputting data about a shape of damage given to a contact portion between a rolling element and a raceway surface of the rolling bearing;
calculating a displacement between an inner ring and an outer ring of the rolling bearing caused by the damage;
calculating a vibration characteristics model by a mode analysis program for analyzing a vibration mode of the bearing device, the vibration characteristics model representing a vibration characteristic of the bearing device; and
calculating a vibration waveform at a placement position of the vibration sensor on the bearing device, by applying, to the vibration characteristics model, a history of an exciting force occurring to the rolling bearing, the history of the exciting force being obtained by multiplying the displacement calculated in the step of calculating a displacement, by a spring constant between the inner ring and the outer ring.

12. The rolling bearing condition monitoring system according to claim 11, wherein the step of calculating a displacement includes the step of calculating, by a dynamics analysis program for conducting a dynamics analysis of the rolling bearing, a history of the displacement caused by the damage during rotation of a rotational shaft of the rolling bearing.

13. The rolling bearing condition monitoring system according to claim 11 or 12, wherein
the placement position of the vibration sensor is selected using the vibration waveform calculated according to the vibration analysis method, and
the step of calculating a vibration waveform includes the step of calculating a vibration waveform at an arbitrary position on the bearing device by applying the history of the exciting force to the vibration characteristics model.

14. The rolling bearing condition monitoring system according to any one of claims 11 to 13, wherein
the vibration analysis method is used to calculate a plurality of vibration waveforms for respective plurality of candidate positions which can be set as the placement position of the vibration sensor, and
a candidate position with a maximum acceleration amplitude of vibration is selected, from the plurality of candidate positions, as the placement position of the vibration sensor.

15. The rolling bearing condition monitoring system according to claim 14, wherein
the bearing device includes a bearing device provided to a main shaft of a wind power generation facility,
for each of the plurality of candidate positions, a ratio is calculated of an acceleration amplitude of vibration according to the vibration analysis method, to an acceleration amplitude of vibration of the bearing device excited by an exciting force occurring to the main shaft, and
from the plurality of candidate positions, a candidate position for which the ratio is a maximum ratio is selected as the placement position of the vibration sensor.

16. The rolling bearing condition monitoring system according to claim 14, wherein
the bearing device includes a bearing device provided to a gearbox of a wind power generation facility,
for each of the plurality of candidate positions, a ratio is calculated of an acceleration amplitude of vibration calculated according to the vibration analysis method, to an acceleration amplitude of vibration of the bearing device excited by an exciting force occurring to a gear of the gearbox, and
from the plurality of candidate positions, a candidate position for which the ratio is a maximum ratio is selected as the placement position of the vibration sensor.

17. The rolling bearing condition monitoring system according to claim 14, wherein
the bearing device includes a bearing device provided to a generator of a wind power generation facility,
the generator is connected by a coupling portion to a gearbox of the wind power generation facility,
for each of the plurality of candidate positions, a ratio is calculated of an acceleration amplitude of vibration calculated according to the vibration analysis method, to an acceleration amplitude of vibration of the bearing device excited by an exciting force occurring to the coupling portion, and
from the plurality of candidate positions, a candidate position for which the ratio is a maximum ratio is selected as the placement position of the vibration sensor.

**18.** The rolling bearing condition monitoring system according to any one of claims 11 to 17, further comprising a selection unit configured to select the placement position of the vibration sensor using a vibration waveform calculated according to the vibration analysis method.

**19.** The rolling bearing condition monitoring system according to any one of claims 11 to 18, wherein the predetermined threshold value is determined using a vibration waveform which is expected to be exhibited at the placement position selected, of the vibration sensor when an abnormality occurs to the rolling bearing.

FIG.1

FIG.2

FIG.3

# FIG.4

START

S10
INPUT DATA ABOUT ROLLING ELEMENTS, RACEWAY, AND DAMAGE

S20
CALCULATE VARIATION OF APPROACH AMOUNT BETWEEN ROLLING ELEMENT AND RACEWAY SURFACE BY CONTACT ANALYSIS PROGRAM

S30
INPUT DATA FOR DYNAMICS ANALYSIS SUCH AS
· CHARACTERISTICS DATA OF BEARING
· VARIATION OF APPROACH AMOUNT
· OPERATING CONDITIONS OF BEARING
· MASSES AND SPRING CHARACTERISTICS OF ROTATIONAL SHAFT AND HOUSING

S40
CALCULATE HISTORY OF DISPLACEMENT BETWEEN INNER AND OUTER RINGS DUE TO DAMAGE, BY DYNAMICS ANALYSIS PROGRAM

S50
INPUT DATA FOR THEORY MODE ANALYSIS SUCH AS
· SHAPE, MATERIAL DENSITY, YOUNG'S MODULUS, AND POISSON'S RATIO OF BEARING DEVICE
· LINEAR SPRING CONSTANTS OF BEARING, HOUSING, BOLT COUPLING PORTION FOR EXAMPLE

S60
CALCULATE MODE INFORMATION OF BEARING DEVICE BY THEORY MODE ANALYSIS PROGRAM

S70
INPUT DATA FOR TRANSIENT RESPONSE ANALYSIS (MODE ANALYSIS METHOD) SUCH AS
· MODE INFORMATION
· VARIATION OF APPROACH AMOUNT
· HISTORY OF DISPLACEMENT BETWEEN INNER AND OUTER RINGS
· BEARING SPRING CONSTANT

S80
CALCULATE VIBRATION WAVEFORM OF BEARING DEVICE BY TRANSIENT RESPONSE ANALYSIS (MODE ANALYSIS METHOD) PROGRAM

RETURN

FIG.5

EP 3 029 449 A1

FIG.6

FIG.7

ACCELERATION
OF VIBRATION

0

TIME

FIG.8

ACCELERATION
OF VIBRATION

0

TIME

FIG.9

ACCELERATION
OF VIBRATION

0

TIME

FIG.10

ACCELERATION
OF VIBRATION

0

TIME

FIG.11

MAGNITUDE
OF SIGNAL

CrFlake

CeFlake

L2

L1

0    t1         t2         t3    TIME

FIG.12

MAGNITUDE
OF SIGNAL

CrSurf

CeSurf

L1

L2

0    t11              t12    TIME

FIG.13

EP 3 029 449 A1

FIG.14

```
                    ┌─────────┐
                    │  START  │
                    └────┬────┘
                         │                                  ┌─ S10
┌────────────────────────▼───────────────────────────────────┐
│ INPUT DATA ABOUT ROLLING ELEMENTS, RACEWAY, AND DAMAGE      │
└────────────────────────┬───────────────────────────────────┘
                         │                                  ┌─ S20
┌────────────────────────▼───────────────────────────────────┐
│ CALCULATE VARIATION OF APPROACH AMOUNT BETWEEN              │
│ ROLLING ELEMENT AND RACEWAY SURFACE BY CONTACT             │
│ ANALYSIS PROGRAM                                           │
└────────────────────────┬───────────────────────────────────┘
                         │                                  ┌─ S30
┌────────────────────────▼───────────────────────────────────┐
│ INPUT DATA FOR DYNAMICS ANALYSIS SUCH AS                   │
│   · CHARACTERISTICS DATA OF BEARING                        │
│   · VARIATION OF APPROACH AMOUNT                           │
│   · OPERATING CONDITIONS OF BEARING                        │
│   · MASSES AND SPRING CHARACTERISTICS OF                   │
│     ROTATIONAL SHAFT AND HOUSING                           │
└────────────────────────┬───────────────────────────────────┘
                         │                                  ┌─ S40
┌────────────────────────▼───────────────────────────────────┐
│ CALCULATE HISTORY OF DISPLACEMENT BETWEEN INNER            │
│ AND OUTER RINGS DUE TO DAMAGE, BY DYNAMICS                 │
│ ANALYSIS PROGRAM                                          │
└────────────────────────┬───────────────────────────────────┘
                         │                                  ┌─ S90
┌────────────────────────▼───────────────────────────────────┐
│ CALCULATE FINITE ELEMENT MODEL OF BEARING DEVICE          │
└────────────────────────┬───────────────────────────────────┘
                         │                                  ┌─ S92
┌────────────────────────▼───────────────────────────────────┐
│ INPUT DATA FOR TRANSIENT RESPONSE ANALYSIS                 │
│ (DIRECT INTEGRAL METHOD) SUCH AS                          │
│   · FINITE ELEMENT MODEL                                  │
│   · VARIATION OF APPROACH AMOUNT                          │
│   · HISTORY OF DISPLACEMENT BETWEEN INNER AND             │
│     OUTER RINGS                                           │
│   · BEARING SPRING CONSTANT                               │
└────────────────────────┬───────────────────────────────────┘
                         │                                  ┌─ S94
┌────────────────────────▼───────────────────────────────────┐
│ CALCULATE VIBRATION WAVEFORM OF BEARING DEVICE            │
│ BY TRANSIENT RESPONSE ANALYSIS (DIRECT INTEGRAL           │
│ METHOD) PROGRAM                                           │
└────────────────────────┬───────────────────────────────────┘
                         │
                    ┌────▼────┐
                    │ RETURN  │
                    └─────────┘
```

## FIG.15

```
        ( START )
            │
            ▼                                    ⌐ S110
┌─────────────────────────────────────────────────────┐
│              INPUT DAMAGE DATA                        │
└─────────────────────────────────────────────────────┘
            │
            ▼                                    ⌐ S120
┌─────────────────────────────────────────────────────┐
│     INPUT DATA FOR DYNAMICS ANALYSIS SUCH AS          │
│       · CHARACTERISTICS DATA OF BEARING               │
│       · OPERATING CONDITIONS OF BEARING               │
│       · MASSES AND SPRING CHARACTERISTICS OF          │
│         ROTATIONAL SHAFT AND HOUSING                  │
└─────────────────────────────────────────────────────┘
            │
            ▼                                    ⌐ S125
┌─────────────────────────────────────────────────────┐
│  CALCULATE VARIATION OF APPROACH AMOUNT FOR EACH      │
│  SLICE OF CONTACT PORTION, RELATIVE TO SHAPE OF       │
│  DAMAGE TO ROLLING SURFACE OR RACEWAY SURFACE         │
└─────────────────────────────────────────────────────┘
            │
            ▼                                    ⌐ S130
┌─────────────────────────────────────────────────────┐
│  CALCULATE HISTORY OF DISPLACEMENT BETWEEN INNER      │
│  AND OUTER RINGS DUE TO VARIATION OF APPROACH         │
│  AMOUNT, BY DYNAMICS ANALYSIS PROGRAM USING SLICE     │
│  METHOD HAVING VARIATION OF APPROACH AMOUNT OF        │
│  EACH SLICE AS ONE OF INPUT DATA                      │
└─────────────────────────────────────────────────────┘
            │
            ▼                                    ⌐ S140
┌─────────────────────────────────────────────────────┐
│  INPUT DATA FOR THEORY MODE ANALYSIS SUCH AS          │
│    · SHAPE, MATERIAL DENSITY, YOUNG'S MODULUS, AND     │
│      POISSON'S RATIO OF BEARING DEVICE                 │
│    · LINEAR SPRING CONSTANTS OF BEARING, HOUSING,      │
│      BOLT COUPLING PORTION FOR EXAMPLE                 │
└─────────────────────────────────────────────────────┘
            │
            ▼                                    ⌐ S150
┌─────────────────────────────────────────────────────┐
│  CALCULATE MODE INFORMATION OF BEARING DEVICE BY      │
│  THEORY MODE ANALYSIS PROGRAM                         │
└─────────────────────────────────────────────────────┘
            │
            ▼                                    ⌐ S160
┌─────────────────────────────────────────────────────┐
│  INPUT DATA FOR TRANSIENT RESPONSE ANALYSIS           │
│  (MODE ANALYSIS METHOD) SUCH AS                       │
│    · MODE INFORMATION                                  │
│    · HISTORY OF DISPLACEMENT BETWEEN INNER AND         │
│      OUTER RINGS                                       │
│    · BEARING SPRING CONSTANT                           │
└─────────────────────────────────────────────────────┘
            │
            ▼                                    ⌐ S170
┌─────────────────────────────────────────────────────┐
│  CALCULATE VIBRATION WAVEFORM OF BEARING DEVICE       │
│  BY TRANSIENT RESPONSE ANALYSIS (MODE ANALYSIS        │
│  METHOD) PROGRAM                                      │
└─────────────────────────────────────────────────────┘
            │
            ▼
        ( RETURN )
```

EP 3 029 449 A1

FIG.16

100A

110 INPUT UNIT

205 APPROACH AMOUNT VARIATION CALCULATION UNIT

230 VIBRATION CHARACTERISTICS CALCULATION UNIT

210 DYNAMICS ANALYSIS MODEL SETTING UNIT

220 DISPLACEMENT CALCULATION UNIT

270 BASE VIBRATION INPUT UNIT

260 ABNORMALITY THRESHOLD VALUE SETTING UNIT

240 VIBRATION WAVEFORM CALCULATION UNIT

160 OUTPUT UNIT

## FIG.17

START

S10

INPUT DATA ABOUT ROLLING ELEMENTS, RACEWAY, AND DAMAGE

S20

CALCULATE VARIATION OF APPROACH AMOUNT BETWEEN
ROLLING ELEMENT AND RACEWAY SURFACE BY CONTACT
ANALYSIS PROGRAM

S30

INPUT DATA FOR DYNAMICS ANALYSIS SUCH AS
· CHARACTERISTICS DATA OF BEARING
· VARIATION OF APPROACH AMOUNT
· OPERATING CONDITIONS OF BEARING
· MASSES AND SPRING CHARACTERISTICS OF
  ROTATIONAL SHAFT AND HOUSING

S40

CALCULATE HISTORY OF DISPLACEMENT BETWEEN INNER
AND OUTER RINGS DUE TO DAMAGE, BY DYNAMICS
ANALYSIS PROGRAM

S50

INPUT DATA FOR THEORY MODE ANALYSIS SUCH AS
· SHAPE, MATERIAL DENSITY, YOUNG'S MODULUS, AND
  POISSON'S RATIO OF BEARING DEVICE
· LINEAR SPRING CONSTANTS OF BEARING, HOUSING,
  BOLT COUPLING PORTION FOR EXAMPLE

S60

CALCULATE MODE INFORMATION OF BEARING DEVICE BY
THEORY MODE ANALYSIS PROGRAM

S70

INPUT DATA FOR TRANSIENT RESPONSE ANALYSIS
(MODE ANALYSIS METHOD) SUCH AS
· MODE INFORMATION
· VARIATION OF APPROACH AMOUNT
· HISTORY OF DISPLACEMENT BETWEEN INNER AND
  OUTER RINGS
· BEARING SPRING CONSTANT

S80

CALCULATE VIBRATION WAVEFORM OF BEARING DEVICE BY
TRANSIENT RESPONSE ANALYSIS (MODE ANALYSIS METHOD)
PROGRAM

S82

DETERMINE, BY MEANS OF CALCULATED VIBRATION
WAVEFORM, THRESHOLD VALUE USED BY CONDITION
MONITORING SYSTEM FOR MAKING DETERMINATION
ABOUT ABNORMALITY

RETURN

FIG.18

100B

```
                                    ┌─────────110
                                    │ INPUT UNIT │
                                    └─────────────┘
                                           │
                     ┌─────────205          │                    ┌─────────230
                     │ APPROACH │           ▼                    │ VIBRATION │
                     │ AMOUNT   │ ◄──────────────────────────────│ CHARACTERISTICS │
                     │ VARIATION│                                 │ CALCULATION UNIT │
                     │ CALCULATION │                             └─────────────────┘
                     │ UNIT     │
                     └──────────┘
                          │
                     ┌─────────210
                     │ DYNAMICS │
                     │ ANALYSIS MODEL │
                     │ SETTING UNIT │
                     └──────────────┘
                          │
                     ┌─────────220
                     │ DISPLACEMENT │
                     │ CALCULATION │
                     │ UNIT │
                     └───────────┘
                          │
  ┌─────────250      ┌─────────240
  │ SENSOR   │       │ VIBRATION │
  │ POSITION │ ◄─────│ WAVEFORM │ ◄────────
  │ SELECTION│       │ CALCULATION │
  │ UNIT     │       │ UNIT │
  └──────────┘       └──────────┘
       │                  │
       │             ┌─────────160
       └────────────►│ OUTPUT UNIT │
                     └─────────────┘
```

FIG.19

```
                    ┌──────────┐
                    │  START   │
                    └────┬─────┘
                         │              ╭─ S1000
    ┌────────────────────▼──────────────────────────┐
    │ INPUT DATA OF A PLURALITY OF CANDIDATE POSITIONS│
    └────────────────────┬──────────────────────────┘
                         │              ╭─ S1100
    ┌────────────────────▼──────────────────────────┐
    │ CALCULATE VIBRATION WAVEFORM AT EACH           │
    │ CANDIDATE POSITION ON BEARING DEVICE           │
    │ EXCITED BY DAMAGE TO BEARING                    │
    └────────────────────┬──────────────────────────┘
                         │              ╭─ S1200
    ┌────────────────────▼──────────────────────────┐
    │ SELECT, AS SENSOR POSITION, CANDIDATE          │
    │ POSITION WITH MAXIMUM ACCELERATION             │
    │ AMPLITUDE FROM THE PLURALITY OF                │
    │ CANDIDATE POSITIONS                            │
    └────────────────────┬──────────────────────────┘
                         │
                    ┌────▼─────┐
                    │   END    │
                    └──────────┘
```

## FIG.20

START

↓ S1000

INPUT DATA OF A PLURALITY OF CANDIDATE POSITIONS

↓ S1100

CALCULATE VIBRATION WAVEFORM AT EACH CANDIDATE POSITION ON BEARING DEVICE EXCITED BY DAMAGE TO BEARING

↓ S1210

CALCULATE VIBRATION WAVEFORM OF BEARING DEVICE EXCITED BY EXCITING FORCE OCCURRING TO MAIN SHAFT

↓ S1220

CALCULATE SN RATIO AT EACH CANDIDATE POSITION

$$\text{SN RATIO} = \frac{\text{ACCELERATION AMPLITUTE OF VIBRATION DUE TO DAMAGE}}{\text{ACCELERATION AMPLITUDE OF VIBRATION DUE TO EXCITING FORCE OF MAIN SHAFT}}$$

↓ S1230

SELECT, AS SENSOR POSITION, CANDIDATE POSITION WITH MAXIMUM SN RATIO FROM THE PLURALITY OF CANDIDATE POSITIONS

↓

END

FIG.21

```
                    ┌─────────────┐
                    │    START    │
                    └─────────────┘
                           │            ╱ S1000
                           ▼
    ┌──────────────────────────────────────────┐
    │  INPUT DATA OF A PLURALITY OF             │
    │  CANDIDATE POSITIONS                      │
    └──────────────────────────────────────────┘
                           │            ╱ S1100
                           ▼
    ┌──────────────────────────────────────────┐
    │  CALCULATE VIBRATION WAVEFORM AT EACH     │
    │  CANDIDATE POSITION ON BEARING DEVICE     │
    │  EXCITED BY DAMAGE TO BEARING             │
    └──────────────────────────────────────────┘
                           │            ╱ S1240
                           ▼
    ┌──────────────────────────────────────────┐
    │  CALCULATE VIBRATION WAVEFORM OF          │
    │  BEARING DEVICE EXCITED BY EXCITING       │
    │  FORCE OCCURRING TO GEAR                  │
    └──────────────────────────────────────────┘
                           │            ╱ S1250
                           ▼
    ┌──────────────────────────────────────────┐
    │  CALCULATE SN RATIO AT EACH CANDIDATE     │
    │  POSITION                                 │
    └──────────────────────────────────────────┘
                           │            ╱ S1260
                           ▼
    ┌──────────────────────────────────────────┐
    │  SELECT, AS SENSOR POSITION, CANDIDATE    │
    │  POSITION WITH MAXIMUM SN RATIO FROM      │
    │  THE PLURALITY OF CANDIDATE POSITIONS     │
    └──────────────────────────────────────────┘
                           │
                           ▼
                    ┌─────────────┐
                    │     END     │
                    └─────────────┘
```

40

FIG.22

```
                    ┌──────────────┐
                    │    START     │
                    └──────┬───────┘
                           │              ⌐ S1000
              ┌────────────▼────────────────┐
              │ INPUT DATA OF A PLURALITY OF │
              │ CANDIDATE POSITIONS          │
              └────────────┬────────────────┘
                           │              ⌐ S1100
              ┌────────────▼─────────────────────┐
              │ CALCULATE VIBRATION WAVEFORM AT EACH │
              │ CANDIDATE POSITION ON BEARING DEVICE │
              │ EXCITED BY DAMAGE TO BEARING         │
              └────────────┬─────────────────────┘
                           │              ⌐ S1270
              ┌────────────▼───────────────┐
              │ CALCULATE VIBRATION WAVEFORM OF │
              │ BEARING DEVICE EXCITED BY EXCITING │
              │ FORCE OCCURRING TO COUPLING PORTION │
              └────────────┬───────────────┘
                           │              ⌐ S1280
              ┌────────────▼─────────────────┐
              │ CALCULATE SN RATIO AT EACH CANDIDATE │
              │ POSITION                              │
              └────────────┬─────────────────┘
                           │              ⌐ S1290
              ┌────────────▼─────────────────┐
              │ SELECT, AS SENSOR POSITION, CANDIDATE │
              │ POSITION WITH MAXIMUM SN RATIO FROM   │
              │ THE PLURALITY OF CANDIDATE POSITIONS  │
              └────────────┬─────────────────┘
                           │
                    ┌──────▼───────┐
                    │     END      │
                    └──────────────┘
```

**INTERNATIONAL SEARCH REPORT**

| International application No. |
| --- |
| PCT/JP2014/067517 |

A. CLASSIFICATION OF SUBJECT MATTER
*G01M13/04*(2006.01)i, *F16C19/00*(2006.01)i, *G01H17/00*(2006.01)i

According to International Patent Classification (IPC) or to both national classification and IPC

B. FIELDS SEARCHED

Minimum documentation searched (classification system followed by classification symbols)
G01M13/04, F16C19/00, G01H17/00

Documentation searched other than minimum documentation to the extent that such documents are included in the fields searched
Jitsuyo Shinan Koho 1922–1996 Jitsuyo Shinan Toroku Koho 1996–2014
Kokai Jitsuyo Shinan Koho 1971–2014 Toroku Jitsuyo Shinan Koho 1994–2014

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-038949 A (Nippon Steel Corp.), 21 February 2008 (21.02.2008), entire text; all drawings (Family: none) | 1–19 |
| A | US 6553837 B1 (Heinrich LYSEN), 29 April 2003 (29.04.2003), entire text; all drawings & EP 1111363 A2 & DE 19938722 A1 | 1–19 |
| A | JP 2012-026500 A (NTN Corp.), 09 February 2012 (09.02.2012), entire text; all drawings (Family: none) | 1–19 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 September, 2014 (10.09.14) | 30 September, 2014 (30.09.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2014/067517 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-003891 A  (The Chugoku Electric Power Co., Inc. et al.), 08 January 2004 (08.01.2004), entire text; all drawings & US 2005/0246150 A1    & EP 1510805 A1 & WO 2003/106960 A1    & KR 10-0715252 B1 & CN 1659427 A | 1-19 |
| A | Onur Cakmak et al., "A Dynamic Model of an Overhung Rotor with Deep-Groove Ball Bearings", [on line], The 1st Joint International Conference on Mutibody System Dynamics, 2010. 03.25, [retrieval date 2014.09.10], Internet <URL:http://web.itu.edu.tr/sanliturk/ Publications/imsd2010_21_paper.pdf> | 1-19 |
| E,A | WO 2014/103861 A1  (NTN Corp.), 03 July 2014 (03.07.2014), entire text; all drawings & JP 2014-142324 A | 1-19 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006234785 A

**Non-patent literature cited in the description**

- **NORIAKI INOUE.** The Practical Equipment Diagnosis through Vibration Method-Answer Questions in the Field. Japan Institute of Plant Maintenance, 65-71